(19) **Europäisches Patentamt / European Patent Office / Office européen des brevets**

(11) **EP 3 952 241 B1**

(12) **EUROPEAN PATENT SPECIFICATION**

(45) Date of publication and mention
of the grant of the patent:
**11.06.2025  Bulletin 2025/24**

(21) Application number: **20794645.0**

(22) Date of filing: **24.04.2020**

(51) International Patent Classification (IPC):
**H04L 9/40** (2022.01)    **H04W 12/06** (2021.01)
**H04L 9/32** (2006.01)    **H04W 12/043** (2021.01)
**H04L 9/08** (2006.01)    **H04L 9/12** (2006.01)

(52) Cooperative Patent Classification (CPC):
**H04W 12/06; H04L 9/0861; H04L 9/12;
H04L 9/3242; H04L 63/0435; H04L 63/062;
H04L 63/0807; H04W 12/043;** H04L 63/0846

(86) International application number:
**PCT/CN2020/086767**

(87) International publication number:
**WO 2020/216338 (29.10.2020 Gazette 2020/44)**

(54) **PARAMETER SENDING METHOD AND APPARATUS**

VERFAHREN UND VORRICHTUNG ZUM SENDEN VON PARAMETERN

PROCÉDÉ ET APPAREIL D'ENVOI DE PARAMÈTRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2019  CN 201910335677**

(43) Date of publication of application:
**09.02.2022  Bulletin 2022/06**

(60) Divisional application:
**25171546.2**

(73) Proprietor: **Huawei Technologies Co., Ltd.
Shenzhen, Guangdong 518129 (CN)**

(72) Inventors:
• **GUO, Longhua
Shenzhen, Guangdong 518129 (CN)**
• **LI, He
Shenzhen, Guangdong 518129 (CN)**
• **CHEN, Jing
Shenzhen, Guangdong 518129 (CN)**

(74) Representative: **Thun, Clemens
Mitscherlich PartmbB
Patent- und Rechtsanwälte
Karlstraße 7
80333 München (DE)**

(56) References cited:
WO-A1-2011/003227    CN-A- 1 859 729
CN-A- 101 123 778    CN-A- 101 399 603
CN-A- 101 511 084    CN-A- 101 741 555
US-A1- 2013 077 510    US-A1- 2017 295 019
US-A1- 2019 081 862

Description

## TECHNICAL FIELD

This application relates to the field of communication technologies, and in particular, to a parameter sending method and an apparatus.

## BACKGROUND

In a mobile communication system, when a terminal device moves outside a home network and is located in a range of a serving network, to ensure that the serving network can serve the terminal device, the terminal device needs to perform mutual authentication with the home network. After the authentication succeeds, the home network may send subscription information of the terminal device to the serving network.

In a process in which the terminal device performs the mutual authentication with the home network, the home network sends a sequence number (sequence number, SQN) to the terminal device through the serving network, where the SQN is used to mitigate a replay attack. After receiving the SQN, the terminal device determines whether the SQN is in a preset range. If the SQN is in the preset range, it may be considered that the SQN is not sent by an attacker, and therefore anti-replay is implemented. If the SQN is not in the preset range, the terminal device sends a locally stored SQN to the home network through the serving network, so that the home network may store the SQN, and then perform mutual authentication with the terminal device by using the stored SQN.

However, when sending the SQN, the terminal device first performs an exclusive OR operation on the SQN and an authentication key (AK) to obtain a result value. The result value is concatenated to a message authentication code (MAC) to jointly form an AUTS, and the AUTS is sent to the home network.

An attacker may intercept an authentication token that carries the SQN and that is sent by the home network, and then replay the authentication token to the terminal device for a plurality of times. The terminal device receives the authentication token for a plurality of times, so that the terminal device feeds back the authentication failure message with synchronization failure (authentication failure message with synchronization failure, AUTS) for a plurality of times. However, in a generation manner of the AUTS, the AK is fixed, and a location of the message authentication code in the AUTS is unchanged. As a result, the attacker only needs to perform a simple operation after receiving two different AUTSs, to determine whether SQNs in the two AUTSs are close to each other. Further, based on this, the attacker determines whether the two different AUTSs come from a same terminal device, and consequently the terminal device is easily tracked. In other words, an existing SQN sending manner has relatively poor security.

The document US 2013/0077510 A1 shows an apparatus and method for switching a packet in communication networks. The document US 2017/0295019 A1 shows a communication device and packet transmission / reception program for transmitting packets in communication networks.

The document US 2019/0081862 A1 shows a communication system and method with rapped configuration propagation in a distributed multi-tenant platform.

## SUMMARY

The present application is defined by the independent claims. Dependent claims show further advantageous developments.

This application provides a parameter sending method and an apparatus, to resolve a currenttechnology problem of relatively poor security of an SQN sending manner.

According to a first aspect, an embodiment of this application provides a parameter sending method. The method may be performed by a terminal device or a chip in the terminal device. The method includes: The terminal device may receive, in an authentication process, a random number and a first sequence number from a core network device. For example, the core network device may be a unified data management network element. The unified data management network element may send, in the authentication process performed by the terminal device, an authentication response carrying the random number and the first sequence number to a security anchor function network element. Then, the security anchor function network element may include the random number and the first sequence number in a user authentication request, and send the user authentication request to the terminal device, where the first sequence number may be carried in an authentication token. The terminal device may obtain the first sequence number in the authentication token; and when determining that the first sequence number exceeds a correct range (for example, comparing the first sequence number and a locally prestored second sequence number, and determining that a difference between the first sequence number and the locally prestored second sequence number is greater than a threshold), concatenate a message authentication code after an exclusive OR value of an authentication key and the second sequence number, to generate a synchronization failure parameter. The authentication key is generated by the terminal device based on a first parameter and a first reference value, and the first reference value is generated based on a second parameter and a third parameter, where each of the first parameter, the second parameter, and the third parameter include any one of the following: the random number, a locally prestored key K, and the message authentication code. After the synchronization failure parameter is generated, a synchronization failure message carrying the synchronization failure parameter is sent to the core network device. The first parameter, the second parameter, and the third parameter may be different from each other, that is, one parameter is the message authentication code; or parameters in the first parameter, the second parameter, and the third parameter may be the same.

According to the foregoing method, when the difference between the first sequence number that is from the core network device and the second sequence number that is locally prestored by the terminal device is relatively large, the terminal device may notify the core network device of the second sequence number by including the second sequence number in the synchronization failure parameter. However, a message authentication code is introduced in a generation process of an authentication key in a synchronization failure parameter. This can ensure that generated authentication keys vary greatly, and therefore generated synchronization failure parameters also vary greatly. Even if an attacker obtains two synchronization failure parameters from the terminal device, the attacker cannot deduce values of second sequence numbers by using a simple exclusive OR operation. This ensures security of the second sequence numbers.

In a possible design, the authentication key may be generated based on the first parameter and the first reference value in a plurality of manners. The following lists two of the plurality of manners.

Manner 1: The first reference value is generated based on the random number and the message authentication code. For example, the random number and the message authentication code are used as two input values of an f5 function to generate the first reference value. The authentication key is generated based on the first reference value and the key K. For example, the first reference value and the key K are used as two output values of an f5 function to generate the authentication key.

Manner 2: The first reference value is generated based on the key K and the message authentication code. For example, the key K and the message authentication code are used as two input values of an f5 function, to output the first reference value. The authentication key is generated based on the first reference value and the random number. For example, the first reference value and the random number are used as two input values of an f5 function, to output the authentication key.

According to the foregoing method, the authentication key is generated by using two double-input and single-output operations (that is, a quantity of input values is 2, and a quantity of output values is 1). In an operation process, the message authentication code is introduced as an output value of one of the operations, so that security of the second sequence number can be ensured, and the second sequence number cannot be easily identified.

In a possible design, the authentication key may alternatively be generated in the following manner: The first reference value is generated based on the random number and the key K. For example, the random number and the key K may be used as two input values of an f5 function, and an output value is used as the first reference value. Then, the authentication key is generated based on the first reference value and the message authentication code. For example, the first reference value and the message authentication code may be used as two input values of an f5 function, and an output value is used as the authentication key.

According to the foregoing method, the authentication key is generated based on the random number, the key K, and the message authentication code by using two double-input and single-output operations, so that a generation manner of the authentication key is more complex, the second sequence number is not easily identified, and the security of the second sequence number can be ensured.

In a possible design, when the first reference value is generated based on the random number and the key K, in addition to the f5 function, another operation, such as an exclusive OR operation, may alternatively be used. In other words, the first reference value is generated by using an exclusive OR operation that is performed on the random number and the key K.

According to the foregoing method, a calculation amount of the exclusive OR operation is relatively small, so that efficiency of generating the first reference value can be effectively improved. Therefore, the authentication key can be relatively quickly generated, and the security of the second sequence number can also be ensured.

In a possible design, when the authentication key is generated based on the first reference value and the message authentication code, in addition to the f5 function, an exclusive OR operation may alternatively be used. In other words, the authentication key is generated by using an exclusive OR operation that is performed on the first reference value and the message authentication code.

According to the foregoing method, a calculation amount of the exclusive OR operation is relatively small, so that efficiency of generating the authentication key can be effectively improved. Therefore, the synchronization failure parameter can be relatively quickly generated, and the security of the second sequence number can also be ensured.

In a possible design, before sending the synchronization failure message to the core network device, the terminal device may further notify the core network device of the generation manner of the authentication key. For example, the terminal device may send a first indication message, where the first indication message is used to indicate the generation manner of the authentication key. The first indication message may be explicitly indicated or implicitly indicated. This is not limited in this embodiment of this application.

According to the foregoing method, the core network device may learn of the generation manner of the authentication key based on the first indication message. This may help correctly obtain the second sequence number from a synchronization generation parameter.

In a possible design, the synchronization failure message may carry a first indication message, where the first indication message is used to indicate the generation manner of the authentication key.

According to the foregoing method, the core network device may learn of the generation manner of the authentication key based on the first indication message carried in the synchronization failure message. This may help correctly obtain the second sequence number from a synchronization generation parameter; and the first indication message does not need to be separately sent, so that signaling can be effectively reduced.

According to a second aspect, an embodiment of this application provides a parameter sending method. The method may be performed by a core network device or a chip in the core network device. The method includes: The core network device may send, in an authentication process, a random number and a first sequence number to a terminal device. For example, the core network device may be a unified data management network element. The unified data management network element may send an authentication response carrying the random number and the first sequence number to a security anchor function network element. Then, the security anchor function network element may send the random number and the first sequence number to the terminal device by using a user authentication request, where the first sequence number may be carried in an authentication token. Then, the core network device may receive a synchronization failure message from the terminal device, where the synchronization failure message carries a synchronization failure parameter. The core network device obtains a message authentication code from the synchronization failure parameter. Then, the core network device obtains a second sequence number from the synchronization failure parameter based on an authentication key, where a generation manner of the authentication key may be the same as a generation manner of the authentication key on a terminal device side, to be specific, a first reference value may be generated based on a second parameter and a third parameter, and then the authentication key is generated based on a first parameter and the first reference value, where each of the first parameter, the second parameter, and the third parameter include any one of the following: the random number, a key K of the terminal device, and the message authentication code. The first parameter, the second parameter, and the third parameter may be different from each other, that is, one parameter is the message authentication code; or parameters in the first parameter, the second parameter, and the third parameter may be the same.

According to the foregoing method, the core network device may obtain the second sequence number from the synchronization failure parameter based on the authentication key. The core network device introduces the message authentication code in a generation process of the authentication key, and may further correctly obtain the second sequence number from the synchronization failure parameter. It can be learned that even if an attacker obtains the synchronization failure parameter from the terminal device, the attacker cannot deduce a value of the second sequence number by using a simple exclusive OR operation, so that the second sequence number may be securely transmitted to the core network device.

In a possible design, the authentication key may be generated based on the first parameter and the first reference value in a plurality of manners. The following lists two of the plurality of manners.

Manner 1: The first reference value is generated based on the random number and the message authentication code. For example, the random number and the message authentication code are used as two input values of an f5 function, and an output value of the f5 function is used as the first reference value. The authentication key is generated based on the first reference value and the key K. For example, the first reference value and the key K are used as two output values of an f5 function, and an output value of the f5 function is used as the authentication key.

Manner 2: The first reference value is generated based on the key K and the message authentication code. For example, the key K and the message authentication code are used as two input values of an f5 function, and an output value of the f5 function is used as the first reference value. The authentication key is generated based on the first reference value and the random number. For example, the first reference value and the random number are used as two input values of an f5 function, and an output value of the f5 function is used as the authentication key.

According to the foregoing method, the authentication key is generated by using two double-input and single-output operations. In an operation process, the message authentication code is introduced as an input value of one of the operations, so that the attacker cannot easily identify the second sequence number, and therefore security of the second sequence number can be ensured.

In a possible design, the authentication key may alternatively be generated in the following manner: The first reference value is generated based on the random number and the key K. For example, the random number and the key K may be used as two input values of an f5 function, and an output value is used as the first reference value. Then, the authentication key is generated based on the first reference value and the message authentication code. For example, the first reference value and the message authentication code may be used as two input values of an f5 function, and an output value is used as the authentication key.

According to the foregoing method, the authentication key is generated based on the random number, the key K, and the message authentication code by using two double-input and single-output operations, so that the generation manner of the authentication key is more complex, the second sequence number is not easily identified, and the security of the second sequence number can be ensured.

In a possible design, when the first reference value is generated based on the random number and the key K, in addition to the f5 function, another operation, such as an exclusive OR operation, may alternatively be used. In other words, the first reference value is generated by using an exclusive OR operation that is performed on the random number and the key K.

According to the foregoing method, a calculation amount of the exclusive OR operation is relatively small, so that efficiency of generating the first reference value can be effectively improved. Therefore, the authentication key can be relatively quickly generated.

In a possible design, when the authentication key is generated based on the first reference value and the message authentication code, in addition to the f5 function, an exclusive OR operation may alternatively be used. In other words, the authentication key is generated by using an exclusive OR operation that is performed on the first reference value and the message authentication code.

According to the foregoing method, a calculation amount of the exclusive OR operation is relatively small, so that efficiency of generating the authentication key can be effectively improved. Therefore, the second sequence number can be relatively quickly obtained.

In a possible design, before receiving the synchronization failure message from the terminal device, the core network device may further receive a first indication message from the terminal device, where the first indication message is used to indicate the generation manner of the authentication key.

According to the foregoing method, the core network device may learn of the generation manner of the authentication key based on the first indication message. This may help correctly obtain the second sequence number from a synchronization generation parameter.

In a possible design, the synchronization failure message includes a first indication message, where the first indication message is used to indicate the generation manner of the authentication key.

According to the foregoing method, the core network device may learn of the generation manner of the authentication key based on the first indication message carried in the synchronization failure message. This may help correctly obtain the second sequence number from a synchronization generation parameter; and the first indication message does not need to be separately sent, so that signaling can be effectively reduced.

According to a third aspect, an embodiment of this application provides a parameter sending method. The method may be performed by a terminal device or a chip in the terminal device. The method includes: The terminal device may receive, in an authentication process, a random number and a first sequence number from a core network device. For example, the core network device may be a unified data management network element. The unified data management network element may send, in the authentication process performed by the terminal device, an authentication response carrying the random number and the first sequence number to a security anchor function network element. Then, the security anchor function network element may include the random number and the first sequence number in a user authentication request, and send the user authentication request to the terminal device, where the first sequence number may be carried in an authentication token. Then, the terminal device may obtain the first sequence number in the authentication token, and compare the first sequence number and a locally prestored second sequence number. After determining that a difference between the first sequence number and the locally prestored second sequence number is greater than a threshold, the terminal device performs symmetric encryption on the second sequence number by using an authentication key, to generate a synchronization failure parameter, where the authentication key is generated based on the random number and a locally prestored key K. Then, a synchronization failure message is sent to the core network device, where the synchronization failure message carries the synchronization failure parameter.

According to the foregoing method, when the difference between the first sequence number that is from the core network device and the second sequence number that is locally prestored by the terminal device is relatively large, the terminal device may include the second sequence number in the synchronization failure parameter, and send the synchronization failure parameter to the core network device. However, the symmetric encryption that is performed on the second sequence number based on the authentication key is not a simple exclusive OR operation. An attacker cannot obtain the key (that is, the authentication key) used for the symmetric encryption, and cannot obtain the second sequence number. Therefore, security of the SQN is improved.

In a possible design, before sending the synchronization failure message to the core network device, the terminal device may notify a generation manner of the synchronization failure parameter. For example, the terminal device may send a first indication message, where the first indication message is used to indicate the generation manner of the synchronization failure parameter. The first indication message may be explicitly indicated or implicitly indicated. This is not limited in this embodiment of this application.

According to the foregoing method, the core network device may learn of the generation manner of the synchronization failure parameter based on the first indication message. This may help correctly obtain the second sequence number from a synchronization generation parameter.

In a possible design, the synchronization failure message includes a first indication message, where the first indication message is used to indicate a generation manner of the synchronization failure parameter.

According to the foregoing method, the core network device may learn of the generation manner of the synchronization failure parameter based on the first indication message carried in the synchronization failure message. This may help correctly obtain the second sequence number from a synchronization generation parameter; and the first indication message does not need to be separately sent, so that signaling can be effectively reduced.

According to a fourth aspect, an embodiment of this application provides a parameter sending method. The method may be performed by a core network device or a chip in the core network device. The method includes: The core network device may send, in an authentication process, a random number and a first sequence number to a terminal device. For example, the core network device may be a unified data management network element, and the unified data management network element may send an authentication response to a security anchor function network element, where the authentication response includes the random number and an authentication token carrying the first sequence number. Then the security anchor function network element may include the random number and the first sequence number in a user authentication request, and send the user authentication request to the terminal device. Then, the core network device may receive a synchronization failure message from the terminal device, where the synchronization failure message carries a synchronization failure parameter. The core network device may perform symmetric decryption on the synchronization failure parameter based on an authentication key, to obtain a second sequence number, where the authentication key is generated based on the random number and a key K of the terminal device.

According to the foregoing method, the core network device may perform the symmetric decryption on the synchronization failure parameter based on the authentication key, to obtain the second sequence number. It can be learned that even if an attacker obtains the synchronization failure parameter, the attacker cannot deduce a value of the second sequence number by using a simple operation, so that the second sequence number may be securely transmitted to the core network device.

In a possible design, before receiving the synchronization failure message from the terminal device, the core network device may further receive a first indication message from the terminal device, where the first indication message is used to indicate a generation manner of the authentication key.

According to the foregoing method, the core network device may learn of a generation manner of the synchronization failure parameter based on the first indication message. This may help correctly obtain the second sequence number from a synchronization generation parameter.

In a possible design, the synchronization failure message includes a first indication message, where the first indication message is used to indicate a generation manner of the authentication key.

According to the foregoing method, the core network device may learn of a generation manner of the synchronization failure parameter based on the first indication message carried in the synchronization failure message. This may help correctly obtain the second sequence number from a synchronization generation parameter; and the first indication message does not need to be separately sent, so that signaling can be effectively reduced.

According to a fifth aspect, an embodiment of this application further provides a communication apparatus. The communication apparatus is used in a terminal device. For beneficial effects, refer to the descriptions in the first aspect or the third aspect. Details are not described herein again. The apparatus has a function of implementing an action in the method example in the first aspect or the third aspect. The function may be implemented by hardware, or may be implemented by hardware executing corresponding software. The hardware or the software includes one or more modules corresponding to the foregoing function. In a possible design, a structure of the apparatus includes a receiving unit, a processing unit, and a sending unit. The units may perform corresponding functions in the method example in the first aspect. For details, refer to the detailed descriptions in the method example. Details are not described herein again.

According to a sixth aspect, an embodiment of this application further provides a communication apparatus. The communication apparatus is used in a core network device. For beneficial effects, refer to the descriptions in the second aspect or the fourth aspect. Details are not described herein again. The apparatus has a function of implementing an action in the method example in the second aspect or the fourth aspect. The function may be implemented by hardware, or may be implemented by hardware executing corresponding software. The hardware or the software includes one or more modules corresponding to the foregoing function. In a possible design, a structure of the apparatus includes a sending unit, a receiving unit, and a processing unit. The units may perform corresponding functions in the method example in the second aspect or the fourth aspect. For details, refer to the detailed descriptions in the method example. Details are not described herein again.

According to a seventh aspect, an embodiment of this application further provides a communication apparatus. The communication apparatus is used in a terminal device. For beneficial effects, refer to the descriptions in the first aspect or the third aspect. Details are not described herein again. A structure of the communication apparatus includes a

## EP 3 952 241 B1

processor and a memory. The processor is configured to support the base station in performing a corresponding function in the method in the first aspect or the third aspect. The memory is coupled to the processor and stores program instructions and data that are necessary for the communication apparatus. The structure of the communication apparatus further includes a communication interface, configured to communicate with another device.

According to an eighth aspect, an embodiment of this application further provides a communication apparatus. The communication apparatus is used in a core network device. For beneficial effects, refer to the descriptions in the second aspect or the fourth aspect. Details are not described herein again. A structure of the communication apparatus includes a processor and a memory. The processor is configured to support the base station in performing a corresponding function in the method in the second aspect or the fourth aspect. The memory is coupled to the processor and stores program instructions and data that are necessary for the communication apparatus. The structure of the communication apparatus further includes a transceiver, configured to communicate with another device.

According to a ninth aspect, this application further provides a computer-readable storage medium. The computer-readable storage medium stores instructions. When the instructions are run on a computer, the computer is enabled to perform the methods according to the foregoing aspects.

According to a tenth aspect, this application further provides a computer program product including instructions. When the computer program product runs on a computer, the computer is enabled to perform the methods according to the foregoing aspects.

According to an eleventh aspect, this application further provides a computer chip. The chip is connected to a memory. The chip is configured to read and execute a software program stored in the memory, to perform the methods according to the foregoing aspects.

## BRIEF DESCRIPTION OF DRAWINGS

FIG. 1A is a schematic diagram of an architecture of a network system according to this application;

FIG. 1B is a schematic structural diagram of a terminal device according to this application;

FIG. 2 is a schematic diagram of a mutual authentication method between UE and a home network in a current technology;

FIG. 3 is a schematic diagram of a parameter sending method according to this application;

FIG. 4 is a schematic diagram of a parameter sending method according to this application;

FIG. 5 is a schematic diagram of a parameter sending method according to this application;

FIG. 6A to FIG. 6E are schematic diagrams of generation manners of an AUTS according to this application; and

FIG. 7 to FIG. 12 are schematic structural diagrams of communication apparatuses according to this application.

## DETAILED DESCRIPTION OF EMBODIMENTS

To make objectives, technical solutions, and advantages of embodiments of this application clearer, the following further describes the embodiments of this application in detail with reference to the accompanying drawings. A specific operation method in a method embodiment may also be applied to an apparatus embodiment or a system embodiment. In the descriptions of this application, unless otherwise specified, "a plurality of" means two or more than two. In addition, it should be understood that, in the descriptions of the embodiments of this application, terms such as "first" and "second" are only used for a purpose of distinction description, but cannot be understood as an indication or implication of relative importance, and cannot be understood as an indication or implication of an order.

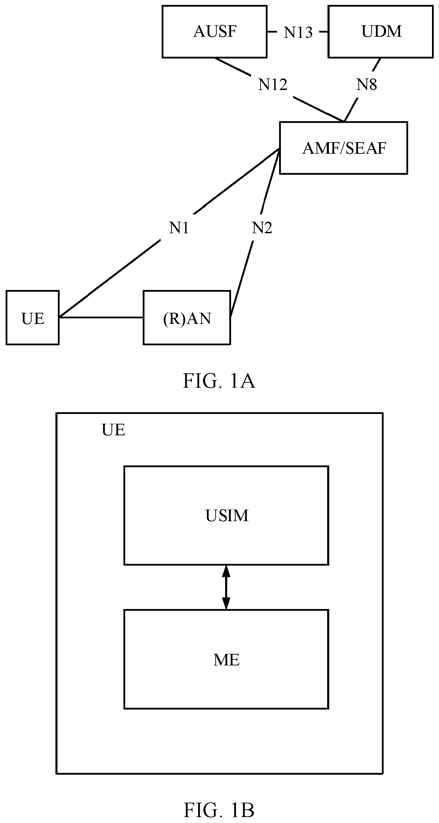

FIG. 1A is a schematic diagram of a possible network architecture used in this application. The network architecture is a 5G network architecture. A network element in the 5G architecture includes user equipment. In FIG. 1A, an example in which a terminal device is UE is used. The network architecture further includes a radio access network (radio access network, RAN), an access and mobility management function (access and mobility function, AMF), a unified data management (unified data management, UDM), an authentication server function (authentication server function, AUSF), a security anchor function (security anchor function, SEAF), and the like.

A main function of the RAN is to control a user to access a mobile communication network in a wireless manner.

The RAN is a part of a mobile communication system, and implements a radio access technology. Conceptually, the RAN camps between devices (for example, a mobile phone, a computer, or any remote controller) and provides a connection of the device to a core network.

The AMF network element is responsible for access management and mobility management of the terminal, for example, registration management, connection management, mobility management, and reachability management. During actual application, the AMF network element includes a mobility management function of a mobility management entity (mobility management entity, MME) in a network framework in LTE, and further includes an access management function.

The SEAF network element is configured to complete authentication on the UE. In 5G, a function of the SEAF may be combined into the AMF.

The AUSF network element has an authentication server function, and is configured to respond to an authentication requested by the SEAF network element. In an authentication process, the AUSF network element receives an authentication vector sent by the UDM, processes the authentication vector, and sends a processed authentication vector to the SEAF.

The UDM network element may store subscription information of the user, generate an authentication parameter, and so on.

An ARPF network element has an authentication credential repository and processing function, and is configured to store a long-term authentication credential of the user, for example, a permanent key K. In 5G, the function of the ARPF network element may be combined into the UDM network element.

The terminal device in this application may also be referred to as user equipment (user equipment, UE); is a device having a wireless transceiver function; and may be deployed on land, where the deployment includes indoor or outdoor, or handheld or vehicle-mounted deployment, may be deployed on water (for example, on a ship), or may be deployed in air (for example, on an aerocraft, a balloon, and a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

FIG. 1B is a schematic structural diagram of UE according to an embodiment of this application. The UE includes two modules: a universal subscriber identity module (universal subscriber identity module, USIM) and a mobile equipment (mobile equipment, ME) module.

The USIM may be a SIM card in the UE, and may store some relatively important subscription information of the UE, for example, a key K agreed on for subscription between the UE and a home network in this embodiment of this application. The USIM may further perform some parameter calculation, and may generate a message authentication code and a synchronization failure parameter in this embodiment of this application.

The ME module may refer to hardware components and software programs other than the USIM in the UE. Usually, the ME module does not store subscription information of UE with a high security requirement. The ME module may provide some auxiliary functions, including: implementing information forwarding between the UISM and a network side.

In the embodiments of this application, an SEAF network element and an AUSF network element may be located in a same network, or may be located in different networks. For example, the SEAF network element is located in a serving network (serving network), for example, in a roaming scenario, the SEAF network element is located in a visited public land mobile network (visited public land mobile network, VPLMN); and the AUSF network element is located in a home network (home network). If UE is outside coverage of the home network, the UE cannot directly access the home network to obtain a service.

If the UE is outside the coverage of the home network and in coverage of the serving network, in order to obtain a network service provided by the serving network, the UE needs to access the serving network. Because the UE has not subscribed to the serving network, to enable the UE to obtain the network service of the serving network, the serving network needs to perform authentication on the UE, and the home network and the UE need to perform mutual authentication. If the UE is in the coverage of the home network, the UE needs to access the home network, and the home network and the UE also need to perform mutual authentication.

In a mutual authentication process, it needs to be determined that a first SQN on a UE side is the same as a second SQN stored by a UDM network element, or a difference between the first SQN and the second SQN is in a preset range. If the first SQN and the second SQN are different or the difference is not in the preset range, the SQN on the UE side and the SQN stored by the UDM network element need to be synchronized.

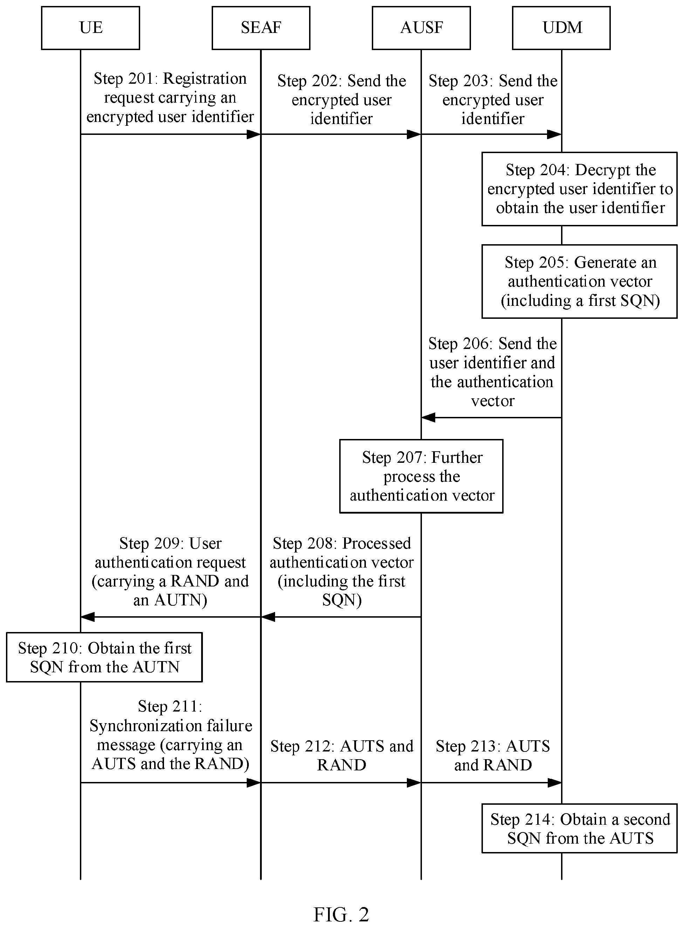

FIG. 2 is a schematic diagram of an existing 5th generation mobile communication technology authentication and key agreement (5th-Generation authentication and key agreement, 5G-AKA) method that is based on the system framework shown in FIG. 1A.

Step 201: UE includes an encrypted user identifier in a registration request, and sends the registration request to an SEAF network element.

For example, the UE may encrypt a subscription permanent identifier (subscription permanent identifier, SUPI) to generate a subscription concealed identifier (subscription concealed identifier, SUCI); and the UE includes the SUCI in the registration request, and sends the registration request to the SEAF network element.

In a possible implementation, the UE encrypts the user identifier by using a configured public key, to obtain the encrypted user identifier. Optionally, when a plurality of public-private key pairs exist in a network, when encrypting the user identifier, the UE may indicate, to the network, a specific public key that is used by the UE to encrypt the user identifier, so that the network selects, based on an indication of the UE, a corresponding private key for decryption. For example, the UE further includes, in the registration request, a key identifier used to decrypt the encrypted user identifier together with the encrypted user identifier, and sends the registration request to the SEAF network element.

Step 202: In order to obtain an authentication vector of the UE and the user identifier from a home network, the SEAF network element includes the encrypted user identifier in an authentication request, and sends the authentication request to an AUSF network element in the home network.

Optionally, the authentication request further carries the key identifier.

Step 203: The AUSF network element includes the encrypted user identifier in a UE authentication obtaining request, and sends the UE authentication obtaining request to a UDM network element.

Optionally, the UE authentication obtaining request further carries the key identifier.

Step 204: The UDM network element decrypts the encrypted user identifier to obtain the user identifier, and the UDM network element queries, based on the user identifier, subscription information of the UE corresponding to the user identifier.

Optionally, when the UE authentication obtaining request carries the key identifier, the UDM network element obtains a decryption key based on the key identifier, and decrypts the encrypted user identifier by using the decryption key to obtain the decrypted user identifier.

Step 205: The UDM network element generates the authentication vector based on the subscription information of the UE, where the authentication vector includes a plurality of parameters. where the plurality of parameters includes a message authentication code (message authentication code, MAC), a RAND, an expected response (eXpected RESponse, XRES*), and $K_{AUSF}$. The UDM network element further obtains a locally prestored first SQN, and the first SQN and the MAC is included in an authentication token (authentication token, AUTN).

In this way, the authentication vector may include the RAND, the AUTN carrying the first SQN and the MAC, the XRES*, and $K_{AUSF}$.

The RAND in the authentication vector is randomly generated by the UDM network element. For other parameters in the authentication vector, the UDM network element may generate the MAC, the XRES*, and $K_{AUSF}$ based on a key K of the UE in the subscription information of the UE and the RAND by using different operations.

In other words, the UDM network element needs to generate the MAC, the XRES*, and $K_{AUSF}$ based on the key K of the UE and the RAND in a different operation manner. For example, when the UDM network element generates the MAC, the key K and the RAND, another parameter may be introduced. For example, the first SQN and an authentication management field (authentication management field, AMF) may be used. The AMF may indicate a used security authentication algorithm and the UE may learn of the AMF.

The MAC is used for integrity check, the XRES* is used for authentication on the UE by the home network, and $K_{AUSF}$ is a derived key synchronized between the UE and the AUSF network element and is used to derive an anchor key $K_{SEAF}$.

The following describes a generation manner of the AUTN.

Both the UDM network element and the UE locally maintain an SQN. In this embodiment of this application, an example in which an SQN maintained by the UDM network element is the first SQN, and an SQN maintained by a UE side is a second SQN. The UDM network element invokes the locally prestored first SQN, to generate the AUTN in the authentication vector. After the AUTN is generated, the first SQN is updated. For example, a value of the first SQN is increased by 1, and an updated first SQN is locally stored as a first SQN to generate an AUTN in an authentication vector next time when mutual authentication is performed with the terminal.

The UDM network element generates an authentication key (AK) based on the RAND and the key K of the UE by using a first operation (for example, f5*, or may be referred to as an f5 function or an f5 operation). Then, the UDM network element performs an exclusive OR operation on the locally prestored first SQN and the AK, and a MAC is concatenated after a generated result value, that is, AUTN=first $SQN \oplus AK \| MAC$. It can be learned that a plurality of last fixed in the AUTN are the MAC.

Optionally, the AMF may also be carried in the AUTN, and AUTN=first $SQN \oplus AK \| AMF \| MAC$.

Step 206: The UDM network element sends an authentication obtaining response to the AUSF network element, where the authentication obtaining response includes the authentication vector and the user identifier.

Step 207: The AUSF network element further processes the authentication vector, for example, performs a hash operation on the XRES* to generate an HXRES*, and performs derivation based on $K_{AUSF}$ to generate $K_{SEAF}$. Where a processed authentication vector includes the RAND, the AUTN, and the HXRES*.

Step 208: The AUSF network element sends an authentication response to the SEAF network element, where the authentication response carries the processed authentication vector.

Step 209: The SEAF network element sends a user authentication request to the UE, where the user authentication request carries some parameters in the processed authentication vector, and the parameters include the RAND and the AUTN.

Step 210: The UE generates the authentication key (AK) based on the RAND and the locally stored key K by using the first operation, removes the MAC in the AUTN. And performs an exclusive OR operation on a remaining part of the AUTN that removes the MAC and the AK, to obtain the first SQN carried in the AUTN.

An example in which the first operation is f5*. f5* is used to output the first 48 bits of a parameter OUT5, and OUT5 is calculated as follows:

$$OUT5=E[rot(E[RAND{\oplus}OP_C]_K{\oplus}OP_C, r5){\oplus}c5]_K{\oplus}OP_C, \text{ where } OP_C=OP{\oplus}E[OP]_K.$$

The RAND and K are input values of f5*, OP, c5, and r5 are constants, E is a block cipher operation, $E[X]_K$ is used to indicate that block cipher is performed on X by using K, rot is a shift operation, $\oplus$ is an exclusive OR operation. In this embodiment of this application, the exclusive OR operation may be represented by xor, or may be represented by $\oplus$.

The UE generates, based on the key K stored in a USIM of the UE and the received RAND, an XMAC in a same manner as the UDM network element generates the MAC. For example, other parameters such as the AMF and the second SQN may also be introduced. The AMF is obtained by the UE from the AUTN. Authentication of the UE on the home network and the integrity check are implemented by comparing the XMAC and the MAC carried in the AUTN.

After the authentication on the home network succeeds, to mitigate a replay attack initiated by an attacker on the UE, the UE may determine, based on the locally prestored second SQN, whether the first SQN is in a preset range.

For example, the UE determines whether a difference between the first SQN and the locally prestored second SQN is less than or equal to a threshold. If the difference is less than or equal to the threshold, it is considered that the home network is not an attacker. A subsequent operation may continue to be performed. For example, the UE generates an RES* based on the RAND and K in a same manner as the UDM network element generates the XRES*. The UE includes the RES* in the authentication response, and sends the authentication response to the SEAF network element. The UE may update the locally prestored second SQN. For example, a value of the locally prestored second SQN is increased by 1, and next time when a user authentication request is received, an updated second SQN is compared with a first SQN carried in an AUTN.

Step 211: If the difference between the first SQN and the locally prestored second SQN is greater than the threshold, the UE sends a synchronization failure message to the SEAF network element, where the synchronization failure message carries an AUTS, and optionally, may further carry the RAND.

That the difference between the first SQN and the locally prestored second SQN is greater than the threshold indicates that the user authentication request may be sent by an attacker, or the first SQN locally prestored on a UDM network element side is different from the second SQN locally prestored by the UE. To ensure synchronization of the SQN on the UDM network element side and the SQN on the UE side, the AUTS carrying the second SQN may be sent.

A generation manner of the AUTS is as follows:
The UE generates the authentication key (AK) based on the RAND and the locally stored key K by using the first operation. Then, the UE performs an exclusive OR operation on the locally prestored second SQN and the AK, and the XMAC is concatenated after a generated result value, that is, AUTS=second SQN$\oplus$AK||XMAC. It can be learned that a plurality of bits fixed at the end of the AUTS are the XMAC.

Step 212: After receiving the synchronization failure message, the SEAF network element sends the synchronization failure message to the AUSF network element.

Step 213: The AUSF network element sends the synchronization failure message to the UDM network element.

Step 214: After receiving the synchronization failure message, the UDM network element generates the authentication key (AK) based on the RAND and the key K in the subscription information of the UE, removes the XMAC in the AUTS, and performs an exclusive OR operation on the AK and a remaining part of the AUTS, to obtain the second SQN carried in the AUTS.

The UDM network element locally stores the second SQN synchronously.

It can be learned from the foregoing content that, when determining that difference between the first SQN and the second SQN sent from the home network is greater than the threshold, the UE needs to feed back the AUTS to the home network. However, it can be learned from the generation manner of the AUTS that a location of the XMAC in the AUTS is fixed, and the AK carried in an AUTS obtained after the XMAC is removed is usually unchanged. Therefore, through processing of two AUTSs, it is very easy to determine whether SQNs carried in the AUTSs are close to each other.

For example, bits occupied by XMACs in the two AUTSs are removed, and an exclusive OR operation is performed on remaining parts of the AUTSs. If the two AUTSs come from a same UE, AKs are the same, and an exclusive OR result is an exclusive OR value of the two SQNs. If time points for sending the two AUTSs are relatively close to each other, the two SQNs are relatively close to each other, and the exclusive OR result is a relatively small value close to zero.

It can be learned from the foregoing that, provided that two AUTSs are obtained, an attacker may determine, by using a simple operation, whether the two AUTSs come from a same UE. After determining that the two AUTSs come from a same UE, the attacker may track the UE to obtain some information of the UE. This may cause information leakage.

In the foregoing descriptions, the 5G-AKA authentication manner in the roaming scenario is used as an example. The mutual authentication between the UE and the home network may alternatively be performed in another authentication manner, for example, in an extensible authentication protocol (extensible authentication protocol, EAP) authentication manner, but a difference lies in a processing operation on the AUSF. In an EAP authentication process, a generation manner of an AUTS is the same as the manner shown in FIG. 2. For details, refer to the foregoing content. In addition, it should be noted that in a non-roaming scenario, the UE is located in the home network, and mutual authentication also needs to be performed. An authentication manner is similar to the authentication manner in the roaming scenario, but a difference lies in that the SEAF network element, the AUSF network element, and the UDM network element are all network elements in the home network. However, a parameter sending method provided in the embodiments of this application is applicable to both a 5G-AKA authentication process in a roaming/non-roaming scenario and an EAP authentication process in a roaming/non-roaming scenario.

To ensure security of an SQN, two manners are provided in the embodiments of this application.

Manner 1: An authentication key is used to perform symmetric encryption on an SQN.

According to this manner, the symmetric encryption rather than a simple exclusive OR operation is performed on the SQN. In this way, an attacker cannot obtain the key (that is, the authentication key) used for the symmetric encryption, and cannot obtain the SQN, so that the SQN is not easily identified, and therefore security of the SQN is improved.

Manner 2: In addition to a random number and a key K, a message authentication code is also introduced in a process of generating an authentication key.

With introduction of message authentication codes, authentication keys generated at different times may be different and may vary greatly, and therefore AUTSs generated by using the authentication keys also vary greatly. In this way, even if an attacker obtains two AUTSs, the attacker cannot deduce, by using a simple operation, whether SQNs are close to each other, and therefore security of the SQN is ensured.

Certainly, the manner 1 and the manner 2 may alternatively be combined. A message authentication code is introduced when an authentication key is generated, and the generated authentication key is used to perform symmetric encryption on an SQN. This is not limited in the embodiments of this application.

The following describes the two manners.

It should be noted that in the following descriptions, an example in which a core network device is a unified data management network element is used. That the core network device may be another network element is not limited in the embodiments of this application. Any network element that may prestore a first sequence number and that needs to synchronize a second sequence number with a terminal device may be used as the core network device.

Manner 1: An authentication key is used to perform symmetric encryption on an SQN.

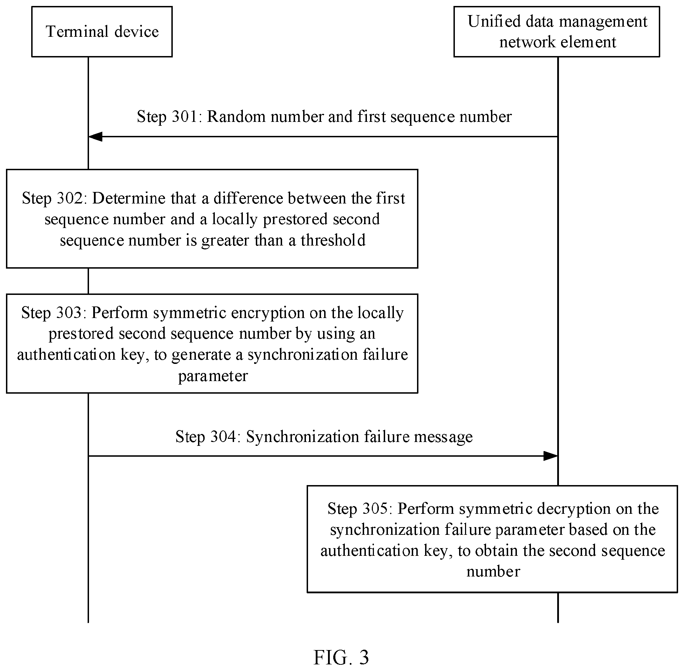

As shown in FIG. 3, the manner 1 of the parameter sending method provided in the embodiments of this application is described. The method includes the following steps.

Step 301: In an authentication process between a unified data management network element and a terminal device, the unified data management network element may send a random number and a first sequence number to the terminal device.

In the authentication process in this embodiment of this application, to implement mutual authentication between the terminal device and a home network, the home network needs to ensure that the terminal device has a valid identity and has subscribed to the home network, and the terminal device needs to confirm validity of the home network, to ensure that the home network is not a malicious network.

The authentication process is performed based on a key K separately stored by the unified data management network element and the terminal device. For the authentication process, refer to the embodiment shown in FIG. 2. An authentication process includes: The unified data management network element sends an authentication vector carrying an AUTN to the terminal device. If the terminal device verifies that an SQN carried in the AUTN is in a correct range (that is, a difference between the SQN and a locally prestored SQN is less than or equal to a threshold) and a MAC is correct, authentication of the terminal device on the home network succeeds. After the authentication succeeds, the terminal device sends an XRES* to the home network. If the XRES* is the same as an RES*, authentication of the home network on the terminal device succeeds. However, if the authentication of the terminal device on the home network fails, for example, if the SQN carried in the AUTN is not in the correct range (that is, the difference between the SQN and the locally prestored SQN is greater than the threshold), the terminal device needs to synchronize the locally prestored SQN with the home network. The parameter sending method provided in this embodiment of this application may be used to implement SQN synchronization between the terminal device and the home network.

Step 302: The terminal device determines that a difference between the first sequence number and a locally prestored second sequence number is greater than the threshold.

Step 303: The terminal device performs symmetric encryption on the locally prestored second sequence number by using an authentication key, to generate a synchronization failure parameter, where the authentication key is generated based on the random number and the locally prestored key K.

Step 304: The terminal device sends a synchronization failure message to the unified data management network element, where the synchronization failure message carries the synchronization failure parameter.

Step 305: After receiving the synchronization failure message, the unified data management network element performs symmetric decryption on the synchronization failure parameter based on the authentication key, to obtain the second sequence number, where the authentication key is generated based on the random number and the key K of the terminal device.

When the terminal device needs to access a serving network or the home network, the terminal device may perform mutual authentication with the home network. In an authentication process, the unified data management network element in the home network may generate an authentication vector, where the authentication vector includes the random number and an authentication token carrying the first sequence number. A manner in which the authentication token carries the first sequence number is not limited in this embodiment of this application. For example, the manner in step 205 may be used. The authentication vector may further include other parameters, for example, an XRES* and $K_{AUSF}$. This is not limited in this embodiment of this application.

After generating the authentication vector, the unified data management network element may send the authentication vector to an authentication server function network element. The authentication server function network element may perform some processing on the authentication vector. As described in step 207, the processed authentication vector is carried in an authentication response and sent to a security anchor function network element. Alternatively, no processing may be performed on the authentication vector, and the authentication vector is directly carried in the authentication response and sent to the security anchor function network element.

After receiving the authentication response, the security anchor function network element may send some parameters in the authentication vector to the terminal device, so that the terminal device may perform mutual authentication with the home network based on the received parameters, where the parameters include the random number and the authentication token.

After obtaining the authentication token in a user authentication request, the terminal device first obtains the first sequence number from the authentication token. A process in which the terminal device obtains the first sequence number from the authentication token is a process reverse to a process in which the unified data management network element generates the authentication token.

For a manner in which the terminal device obtains the first sequence number from the authentication token, refer to related descriptions in step 210. Details are not described herein again.

As described in the embodiment shown in FIG. 2, the terminal device and the unified data management network element may separately prestore an SQN locally, a sequence number prestored by the unified data management network element is the first sequence number, and a sequence number prestored by the terminal device is the second sequence number.

The terminal device compares the first sequence number and the second sequence number, to mitigate a replay attack and avoid that the currently received user authentication request is initiated by an attacker. In some scenarios, the SQNs locally prestored by the terminal device and the unified data management network element should be the same, but there may be a deviation to some extent. For example, in a previous authentication process between the UE and the UDM network element, the UE and the UDM network element do not update locally prestored SQNs. The UDM network element may increase a value of a first SQN by 1, but a UE side does not increase a value of a second SQN by 1 because authentication fails. Therefore, the first sequence number and the second sequence number are allowed to be different, but the difference between the two sequence numbers needs to be less than or equal to the threshold. A specific value of the threshold is not limited in this embodiment of this application. A corresponding threshold may be configured based on an application scenario.

If the difference between the two sequence numbers is greater than the threshold, there may be two reasons. One is that the terminal device is subjected to a replay attack, and the other is that a deviation between the first sequence number prestored by the unified data management network element and the second sequence number is excessively large.

Regardless of the reason, the terminal device may maintain a sequence number synchronized with the unified data management network element, and send the locally prestored second sequence number to the unified data management network element, so that the unified data management network element replaces the locally prestored first sequence number with the second sequence number.

The symmetric encryption in step 303 refers to an encryption manner in which an encryption key and a decryption key are the same. A specific encryption algorithm is not limited in this embodiment of this application. Any encryption algorithm in which an encryption key and a decryption key are the same is applicable to this embodiment of this application.

In this embodiment of this application, the authentication key may be used as the encryption key. For the symmetric encryption algorithm, a length of an input value and a length of the encryption key are required to be fixed, and a length of a finally encrypted result value is also required to be fixed.

When the symmetric encryption is performed on the second sequence number by using the authentication key, the length of the encryption key and the length of the input value need to meet requirements of the symmetric encryption algorithm. An advanced encryption standard (advanced encryption standard, AES) encryption algorithm is used as an example. The AES encryption algorithm requires both the length of the input value and the length of the encryption key to be 128 bits (bit). If a length of the second sequence number is less than 128 bits, the unified data management network element may add a bit to the second sequence number, for example, may add a preset sequence (for example, an all-1 sequence or an all-0 sequence, or may be a sequence that can be learned of by both the UE and the unified data management network element), so that a length obtained after the preset sequence is concatenated to the second sequence number is 128 bits. For another example, one or more same second sequence numbers may be concatenated after the second sequence number, and 128 bits starting from the first bit are used as the input value. If the length of the second sequence number is greater than 128 bits, the unified data management network element may delete a bit from the second sequence number, for example, may delete a preset sequence in the second sequence number (for example, remove a part starting from the first bit in the second sequence number, where it needs to be ensured that the deleted preset sequence can be learned of by both the UE and the unified data management network element, so that the unified data management network element may subsequently recover the complete second sequence number), so that a length of an adjusted second sequence number is 128 bits.

In the foregoing descriptions, only the second sequence number is used as an example. If a length of the authentication key does not meet the length requirement of the symmetric encryption algorithm on the encryption key, the authentication key may also be adjusted by adding a bit or deleting a bit.

A manner of adjusting the authentication key or the second sequence number is not limited in this embodiment of this application. Any manner that may enable an adjusted authentication key or an adjusted second sequence number to meet the requirement of the symmetric encryption algorithm on the encryption key or the input value is applicable to this embodiment of this application.

After performing the symmetric encryption on the locally prestored second sequence number by using the authentication key, the terminal device may use an encrypted value as the synchronization failure parameter; or may further process the symmetrically encrypted value, to generate the synchronization failure parameter.

For example, the terminal device may generate a message authentication code based on the random number and the locally prestored key K, and connect the message authentication code after the encrypted value, to generate the synchronization failure parameter. Another parameter may also be introduced into generation of the message authentication code. For example, the message authentication code may be generated based on the random number, the locally prestored key K, an AMF, and the second sequence number.

It should be noted that, because a manner in which the terminal device generates the synchronization failure parameter in this embodiment of this application is different from the manner of generating the AUTS in the embodiment shown in FIG. 2, to generate the synchronization failure parameter in the manner provided in this embodiment of this application, the terminal device needs to be upgraded. For example, a universal subscriber identity module (universal subscriber identity module, USIM) of the terminal device may be upgraded.

After generating the synchronization failure parameter, the terminal device may include the synchronization failure parameter in the synchronization failure message. Optionally, the synchronization failure message further includes the random number.

The terminal device may send the synchronization failure message to the security anchor function network element. The security anchor function network element forwards the synchronization failure message to the authentication server function network element. The authentication server function network element sends the synchronization failure message to the unified data management network element.

It should be noted that, when receiving the synchronization failure parameter, the unified data management network element cannot learn of a specific manner in which the terminal device generates the synchronization failure parameter. If the unified data management network element considers that the terminal device generates the synchronization failure parameter in the manner in the embodiment shown in FIG. 2, the unified data management network element cannot correctly obtain the second sequence number. To avoid the foregoing situation, the terminal device and the unified data management network element may agree on a generation manner of the synchronization failure parameter in advance. Alternatively, before sending the synchronization failure message to the unified data management network element, the terminal device may send a first indication message to the unified data management network element, to indicate the generation manner of the synchronization failure parameter. An indication manner is not limited in this embodiment of this application. An explicit indication manner may be used. For example, the first indication message may indicate that the synchronization failure parameter is generated in a symmetric encryption manner; and when receiving the first indication message, the unified data management network element may determine that the subsequently received synchronization failure parameter is generated in the symmetric encryption manner. Alternatively, an implicit indication manner may be used. For another example, the first indication message may indicate that the synchronization failure parameter is generated in a generation manner used after the terminal device (for example, a USIM card) is upgraded, or may indicate that the terminal device (for example, the USIM card) has been upgraded, or may indicate a release, such as R15 or R16, of the USIM card in the terminal device; and when receiving the first indication message, the unified data management network element may determine whether the USIM card of the terminal device has been upgraded, and whether the subsequently received synchronization failure parameter is generated in the symmetric encryption manner.

Optionally, before sending the first indication message, the terminal device may further encrypt the first indication message. An encryption manner is not limited in this embodiment of this application. For example, the first indication message may be encrypted in an SUPI encryption manner. For the encryption manner, refer to related descriptions in step 201. Details are not described herein again.

In a possible implementation, to reduce signaling, when sending the synchronization failure message to the unified data management network element, the terminal device simultaneously sends a first indication message, where the first indication message is carried in the synchronization failure message.

The indication manner and the sending manner of the first indication message are merely examples. These are not limited in this embodiment of this application. Any generation manner that may enable the unified data management network element to learn of the synchronization failure parameter is applicable to this embodiment of this application.

To obtain the second sequence number from the synchronization failure parameter, the unified data management network element obtains the second sequence number in a manner reverse to the manner in which the terminal device generates the synchronization failure parameter. In other words, the unified data management network element needs to perform the symmetric decryption. A key used for the symmetric decryption is still the authentication key. The unified data management network element may generate the authentication key based on the key K of the terminal device and the random number in a same manner as that of the terminal device. The random number may be carried in the synchronization failure message. In another possible implementation, the unified data management network element may store the random number that is randomly generated when the authentication vector is generated; and after receiving the synchronization failure message, generate the authentication key based on the key K of the terminal device and the stored random number.

It should be understood that when the terminal device is subscribed to the home network, the key K is agreed on, where the key K is stored in subscription information of the terminal device. The subscription information of the terminal device may be stored in the unified data management network element, or may be stored in another network element (for example, a unified data repository (unified data repository, UDR) network element). The unified data management network element may obtain the subscription information of the terminal device from the another network element, and the key K is also locally stored by the terminal device.

If another parameter is also introduced when the synchronization failure parameter is generated, for example, if the message authentication code is concatenated to the encrypted value after the terminal device performs the symmetric encryption on the second sequence number, the unified data management network element may remove the message authentication code in the synchronization failure parameter before decryption, and then perform symmetric decryption on a remaining part of the synchronization failure parameter by using the authentication key, to obtain the second sequence number.

After obtaining the second sequence number, the unified data management network element may directly replace the locally stored first sequence number. Alternatively, the unified data management network element may first compare the second sequence number and the first sequence number; and after determining that the second sequence number is different from the first sequence number, replace the locally stored first sequence number. Alternatively, after determining that the second sequence number is different from the first sequence number, the unified data management network element may not replace the first sequence number.

Manner 2: In addition to a random number and a key K, a message authentication code is also introduced in a process of generating an authentication key.

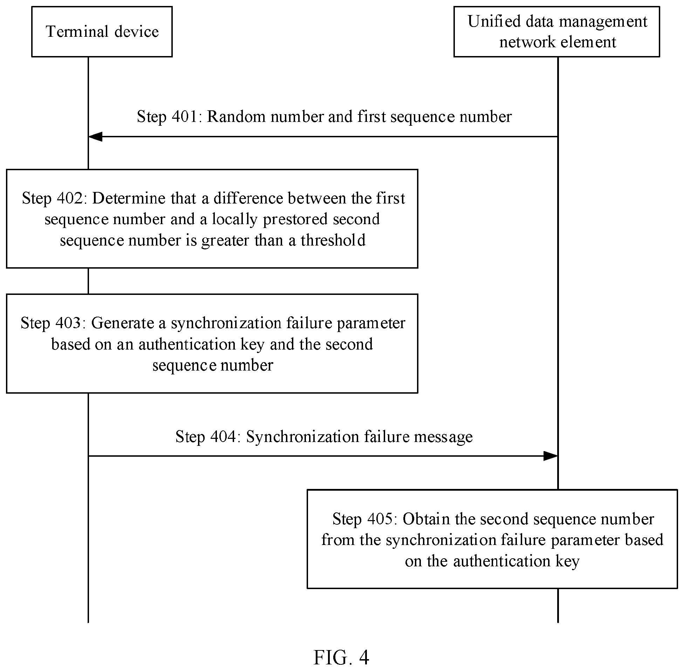

As shown in FIG. 4, the manner 2 of the parameter sending method provided in the embodiments of this application is described. The method includes the following steps.

Step 401: This step is the same as step 301. For details, refer to related descriptions of step 301. Details are not described herein again.

Step 402: This step is the same as step 302. For details, refer to related descriptions of step 302. Details are not described herein again.

Step 403: A terminal device connects a message authentication code after an exclusive OR value of an authentication key and a sequence number, where the authentication key is generated based on a first parameter and a first reference value, and the first reference value is generated based on a second parameter and a third parameter, where each of the first parameter, the second parameter, and the third parameter include any one of the following: a random number, a locally prestored key K, and the message authentication code, and the first parameter, the second parameter, and the third parameter are different parameters.

Step 404: This step is the same as step 304. For details, refer to related descriptions of step 304. Details are not described herein again.

Step 405: A unified data management network element first obtains the message authentication code from a synchronization failure parameter, and then obtains the second sequence number from the synchronization failure parameter based on the authentication key, where a manner in which the unified data management network element generates the authentication key is the same as a manner in which the terminal device generates the authentication key.

To ensure security of the second sequence number, the authentication key is generated by using two double-input and single-output operations (that is, a quantity of input values is 2, and a quantity of output values is 1), and the message authentication code is introduced in an operation process. Generation manners of the authentication key may be classified into the following three manners based on different parameters used in each double-input and single-output operation.

Manner 1: The first reference value is generated based on the random number and the message authentication code, and the authentication key is generated based on the first reference value and the key K.

The terminal device may first generate the message authentication code based on the random number and the key K. For example, when the message authentication code is generated, other parameters such as the second SQN and an AMF may also be introduced. After the message authentication code is generated, the first reference value may be generated based on the message authentication code and the random number.

An operation manner of generating the first reference value based on the random number and the message authentication code is not limited in this embodiment of this application. Any operation manner in which one parameter may be generated by using two parameters is applicable to this embodiment of this application. For example, the first reference value may be generated by using an exclusive OR operation, an exclusive NOR operation, or the first operation in the embodiment shown in FIG. 2, that is, an f5 operation. For descriptions of the f5 operation, refer to related descriptions in the embodiment shown in FIG. 2. The random number and the message authentication code may separately replace a RAND and K of an OUT5 generation formula.

After the first reference value is generated, the terminal device may generate the authentication key based on the first reference value and the key K. Similarly, an operation manner of generating the authentication key based on the first reference value and the key K is not limited in this embodiment of this application. The authentication key may be generated by using an operation manner the same as that of generating the first reference value, or may be generated by using a different operation manner. This is not limited in this embodiment of this application. Any operation manner in which one parameter may be generated by using two parameters is applicable to this embodiment of this application. For example, the first reference value may be generated by using an exclusive OR operation, a multiplication operation, or the first operation in the embodiment shown in FIG. 2, that is, an f5 operation. For descriptions of the f5 operation, refer to related descriptions in the embodiment shown in FIG. 2. The key K and the first reference value may separately replace a RAND and K of an OUT5 generation formula.

Manner 2: The first reference value is generated based on the key K and the message authentication code, and the authentication key is generated based on the first reference value and the random number.

Different from the manner 1, in the manner 2, the first reference value is first generated based on the key K and the message authentication code, and the authentication key is then generated based on the first reference value and the random number. In other words, an introduction sequence of the key K and the random number is reverse to an introduction sequence of the key K and the random number in the manner 1. For a used operation manner, refer to related descriptions in the manner 1. Details are not described herein again.

Manner 3: The first reference value is generated based on the random number and the key K, and the authentication key is generated based on the first reference value and the message authentication code.

In the manner 3, the first reference value is generated based on the random number and the key K. An operation manner of generating the first reference value is not limited in this embodiment of this application. Any operation manner in which one parameter may be generated by using two parameters is applicable to this embodiment of this application. For example, the first reference value may be generated based on the random number and the key K by using an exclusive OR operation with a relatively small calculation amount or another operation manner such as an exclusive NOR operation. Alternatively, the first reference value may be generated by using the first operation in the embodiment shown in FIG. 2, that is, an f5 operation. For descriptions of the f5 operation, refer to related descriptions in the embodiment shown in FIG. 2. The key K and the random number may separately replace a RAND and K of an OUT5 generation formula.

After the first reference value is generated, the terminal device may generate the authentication key based on the first reference value and the message authentication code. Similarly, an operation manner of generating the authentication key based on the first reference value and the key K is not limited in this embodiment of this application. The authentication key may be generated by using an operation manner the same as that of generating the first reference value, or may be generated by using a different operation manner. This is not limited in this embodiment of this application. Any operation manner in which one parameter may be generated by using two parameters is applicable to this embodiment of this application. For example, the authentication key may be generated based on the first reference value and the message authentication code by using an exclusive OR operation; and the first reference value may be generated by using the first operation in the embodiment shown in FIG. 2, that is, an f5 operation. For descriptions of the f5 operation, refer to related descriptions in the embodiment shown in FIG. 2. The message authentication code and the first reference value may separately replace a RAND and K of an OUT5 generation formula.

It should be noted that, because the manner in which the terminal device generates the authentication key in this embodiment of this application is different from the manner of generating the AK in the embodiment shown in FIG. 2, to generate the synchronization failure parameter in the manner provided in this embodiment of this application, the terminal device needs to be upgraded. For example, a universal subscriber identity module (universal subscriber identity module, USIM) of the terminal device may be upgraded.

The foregoing three manners of generating the authentication key are all examples, and a generation manner of the authentication key is not limited in this embodiment of this application. In the foregoing three manners, it can be learned that both the first reference value and the final authentication key are generated by using a double-input and single-output operation. Compared with the generation manner shown in FIG. 2, only one more operation is used. If an upgrade manner is used, the terminal device may generate the authentication key in one of the foregoing three manners. In this way, a relatively small change is made to the terminal device, and the terminal device is only required to be configured to support a plurality of operations. Therefore, the change made to the terminal device may be minimized while the security of the second sequence number is ensured.

After the authentication key is generated, an exclusive OR operation is performed on the authentication key and the second sequence number, and the message authentication code is concatenated after the exclusive OR value of the authentication key and the second sequence number (where the exclusive OR value and the message authentication code are concatenate), to generate a synchronization authentication parameter.

It should be noted that, when receiving the synchronization failure parameter, the unified data management network element cannot learn of a specific manner in which the terminal device generates the authentication key. If the unified data management network element considers that the terminal device generates the synchronization failure parameter in the manner in the embodiment shown in FIG. 2, the unified data management network element cannot correctly obtain the second sequence number. To avoid the foregoing situation, the terminal device and the unified data management network element may agree on a generation manner of the authentication key in advance. Alternatively, before sending the synchronization failure message to the unified data management network element, the terminal device may send a first indication message to the unified data management network element, to indicate the generation manner of the authentication key. An indication manner is not limited in this embodiment of this application. An explicit indication manner may be used. For example, the first indication message may indicate that the authentication key is generated in the manner 1 (where the manner 1 is used as an example, and certainly, any one of other manners may alternatively be used); and when receiving the first indication message, the unified data management network element may determine that the authentication key in the subsequently received synchronization failure parameter is generated in the manner 1. Alternatively, an implicit indication manner may be used. For another example, the first indication message may indicate that the authentication key is generated in a generation manner used after the terminal device (for example, a USIM card) is upgraded, or may indicate that the terminal device (for example, the USIM card) has been upgraded, or may indicate release information of the terminal device (for example, the USIM card), for example, indicate that a release (release) of the USIM card is R15 or R16; and when receiving the first indication message, the unified data management network element may determine whether the USIM card of the terminal device has been upgraded, and whether the subsequently received authentication key is generated in one of the foregoing three manners. A specific manner to be used may be preconfigured by the unified data management network element. For example, the unified data management network element may preconfigure that if the terminal device has been upgraded, the authentication key is generated in the manner 1.

In a possible implementation, to reduce signaling, when sending the synchronization failure message to the unified data management network element, the terminal device simultaneously sends a first indication message, where the first indication message is carried in the synchronization failure message.

The indication manner and the sending manner of the first indication message are merely examples. These are not limited in this embodiment of this application. Any generation manner that may enable the unified data management network element to learn of the synchronization failure parameter is applicable to this embodiment of this application.

To obtain the second sequence number from the synchronization failure parameter, the unified data management network element obtains the second sequence number in a manner reverse to the manner in which the terminal device generates the synchronization failure parameter.

To ensure that the authentication key used by the unified data management network element is the same as the authentication key used by a terminal device side, the unified data management network element needs to obtain the message authentication code generated by the terminal device side. After performing the exclusive OR operation on the authentication key and the second sequence number, the terminal device concatenates the message authentication code after the exclusive OR value, that is, a plurality of bits fixed at the end of the synchronization failure parameter are the message authentication code. Therefore, the unified data management network element may directly obtain the message authentication code from the synchronization failure parameter before decryption. The unified data management network element generates the authentication key in a same manner as that of the terminal device, and then performs an exclusive OR operation on the authentication key and a remaining part of the synchronization failure parameter that is obtained after the message authentication code is removed, to obtain the second sequence number.

The manner in which the unified data management network element generates the authentication key is the same as that of the terminal device, where the unified data management network element may obtain the key K of the terminal device from subscription information of the terminal device. For the manner in which the unified data management network element generates the authentication key, refer to the foregoing manner in which the terminal device generates the authentication key. Details are not described herein again.

After obtaining the second sequence number, the unified data management network element may directly replace a locally stored first sequence number. Alternatively, the unified data management network element may first compare the second sequence number and the first sequence number; and after determining that the second sequence number is different from the first sequence number, replace the locally stored first sequence number. Otherwise, the unified data management network element may not replace the first sequence number.

In a possible implementation, after obtaining the second sequence number, the unified data management network element may perform integrity check on the message authentication code obtained from the synchronization failure parameter. Specifically, the unified data management network element may generate a check value in a manner the same as the manner in which the terminal device generates the message authentication code. For example, if the terminal device generates the message authentication code based on the key K, the random number, the second sequence number, and the AMF, the unified data management network element may also generate the check value based on the key K, the random number, the second sequence number, and the AMF. If the check value is the same as with the message authentication code, the check succeeds. If the check value is different from the message authentication code, the check fails, and it indicates that information received by the unified data management network element may be tampered with. The unified data management network element may obtain an incorrect second sequence number. In this way, the unified data management network element may request the second sequence number from the terminal device again, or may not replace the locally stored first sequence number with the second sequence number.

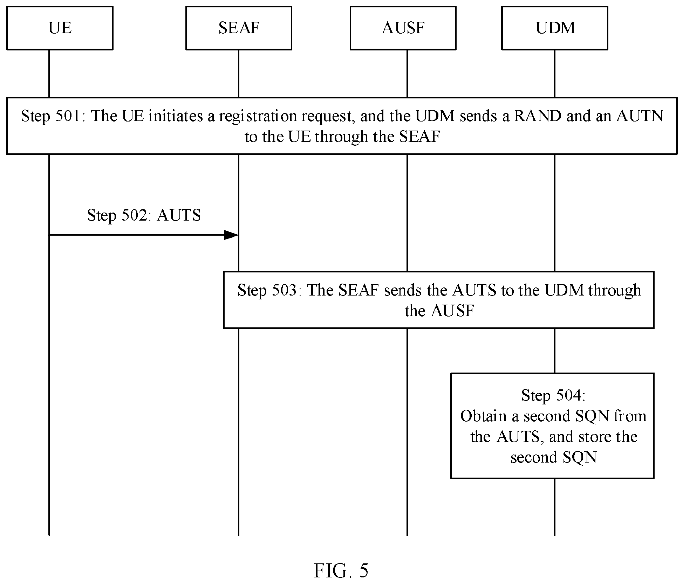

FIG. 5 shows a parameter sending method according to an embodiment of this application. The method includes the following steps.

Step 501: This step is the same as step 201 to step 210. For details, refer to related descriptions of step 201 to step 210 shown in FIG. 2. Details are not described herein again.

Step 502: If a difference between a first SQN and a second SQN is greater than a threshold, UE sends a synchronization failure message to an SEAF network element, and includes an AUTS and a RAND in the synchronization failure message.

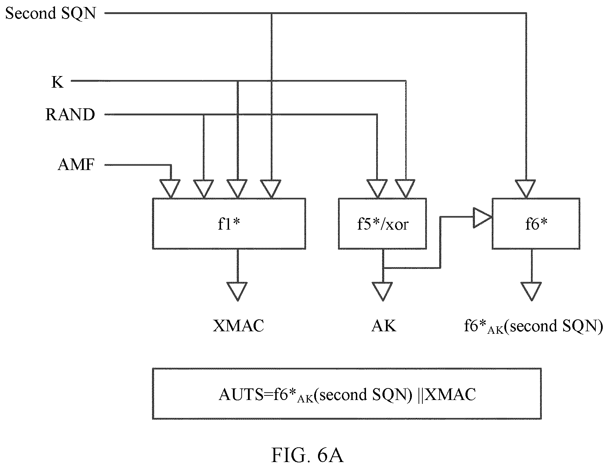

In this embodiment of this application, five generation manners of the AUTS are provided. As shown in FIG. 6A to FIG. 6E, an example in which f5* represents a first operation, a length of an input value is required to be 128 bits, xor represents an exclusive OR operation, TEMP is a first reference value with a length of 48 bits, an operation manner used to generate an XMAC is f1*, and a length of the XMAC is 64 bits is used. The following separately describes the five manners.

Manner 1: As shown in FIG. 6A, an AK is obtained through calculation by using an exclusive OR (xor) operation or a first operation, and symmetric encryption is performed on the second SQN by using the AK as an encryption key, where f6* is a symmetric encryption algorithm, and after the second SQN is encrypted by using the AK, an XMAC is concatenated after a generated result value.

The encryption key, an input value, and an output value of the symmetric encryption are as follows, where an example in which a length of the AK is 128 bits (bit) is used.

The encryption key is the AK with the length of 128 bits.

The input value is first 128 bits of three concatenated second SQNs, that is, first 128 bits of second SQN∥second SQN∥second SQN.

The output value is $f6*_{AK}$(second SQN) with a length of 128 bits.

$$\text{AUTS} = f6*_{AK}(\text{second SQN}) \| \text{XMAC}.$$

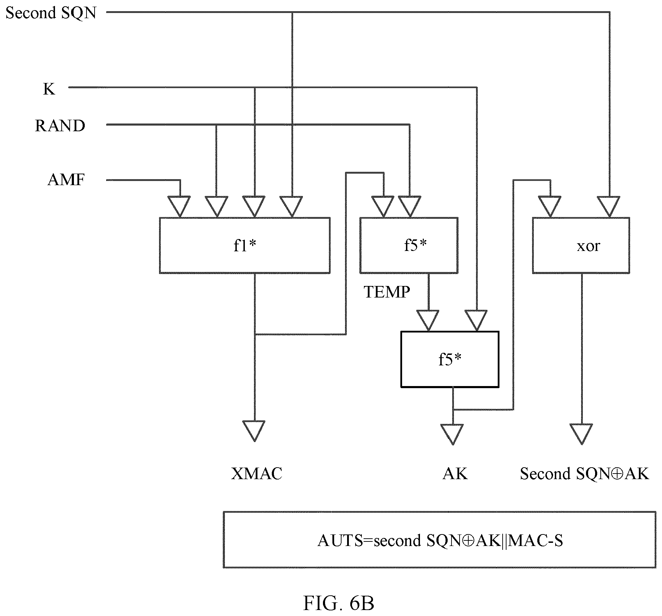

Manner 2: As shown in FIG. 6B, an AK is calculated by using two first operations. XMAC∥XMAC is used as an input value of the 1st first operation, and a RAND is used as the other input value of the 1st first operation, to output a first reference value. The first reference value and a key K are used as two input values of the 2nd first operation, to output the AK. After an exclusive OR operation is performed on the AK and the second SQN, the XMAC is concatenated after a generated result value, to generate the AUTS, where AUTS=(AK⊕second SQN)∥XMAC.

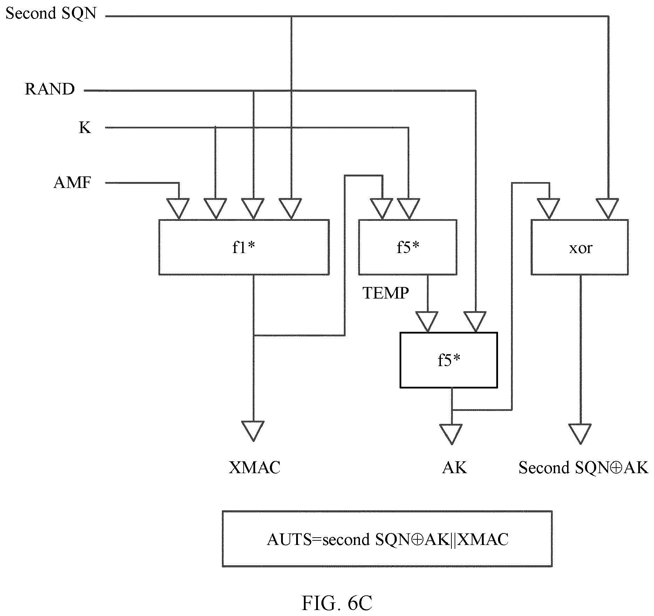

Manner 3: As shown in FIG. 6C, an AK is calculated by using two first operations. XMAC∥XMAC is used as an input value of the 1st first operation, and a key K is used as the other input value of the 1st first operation, to output a first reference value. The first reference value and a RAND are used as two input values of the 2nd first operation, to output the AK. After an exclusive OR operation is performed on the AK and the second SQN, the XMAC is concatenated after a generated result value, to generate the AUTS, where AUTS=(AK⊕second SQN)||XMAC.

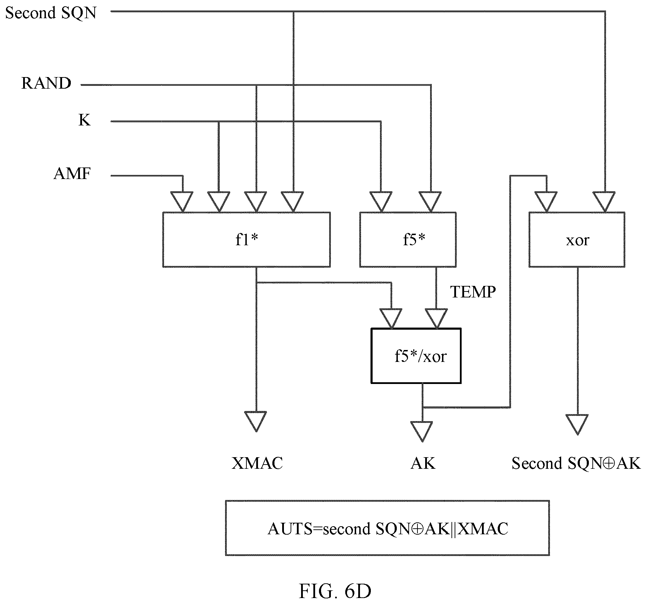

Manner 4: As shown in FIG. 6D, an AK is calculated by using two first operations, or the AK is calculated by using one first operation and one exclusive OR operation. A key K and a RAND are used as two input values of the 1st first operation, to output a first reference value. Then, the AK is output based on an XMAC and the first reference value by using a first operation, or the AK is output after an exclusive OR operation is performed on the XMAC and the first reference value. After an exclusive OR operation is performed on the AK and the second SQN, the XMAC is concatenated after a generated result value, to generate the AUTS, where AUTS=(AK⊕second SQN)||XMAC.

When the AK is output based on the XMAC and the first reference value by using the first operation, XMAC||XMAC is used as an input value of the first operation, and first 128 bits of first reference value||first reference value||first reference value are used as the other input value of the first operation.

When the AK is output after the exclusive OR operation is performed on the XMAC and the first reference value, 48 bits of the XMAC is used as an input value of the exclusive OR operation, and the first reference value is used as the other input value of the exclusive OR operation.

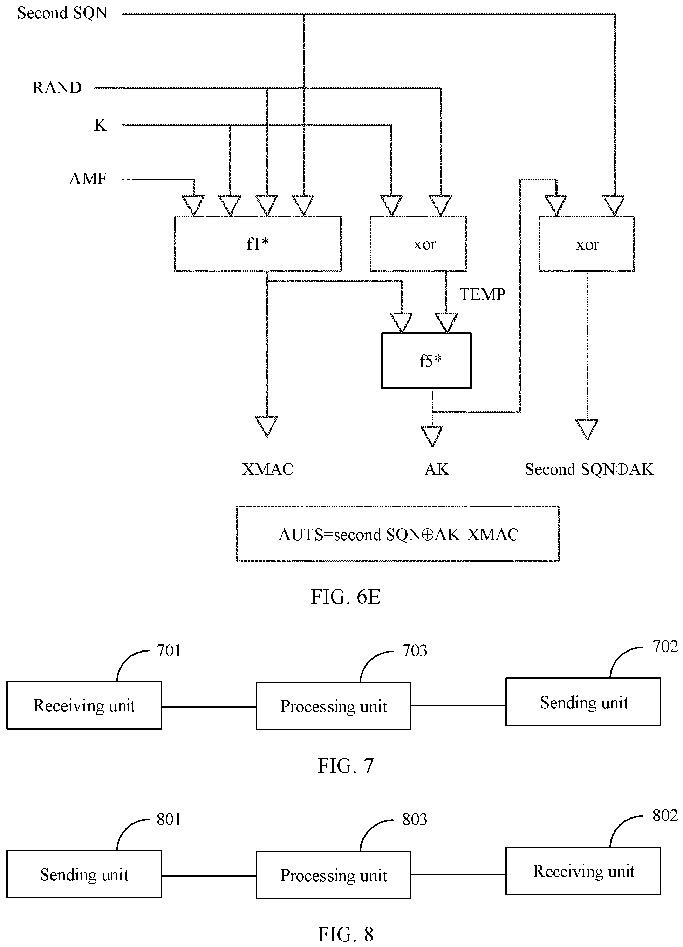

Manner 5: As shown in FIG. 6E, a first reference value is obtained after an exclusive OR operation is performed on a key K and a RAND. An XMAC and TEMP are used as two input values of a first operation, to output an AK. After an exclusive OR operation is performed on the AK and the second SQN, the XMAC is concatenated after a generated result value, to generate the AUTS, where AUTS=(AK⊕second SQN)||XMAC.

It should be noted that, in the manner 2 to the manner 5, an example in which the first operation is an f5 operation is used. For a process of the f5 operation, refer to related descriptions in step 210 in the embodiment shown in FIG. 2. A specific parameter that is in two input parameters of the f5 operation and that replaces a RAND or K is not limited in this embodiment of this application, and may be set based on a specific scenario.

Step 503: This step is the same as step 212 and step 213. For details, refer to related descriptions of step 212 and step 213 shown in FIG. 2. Details are not described herein again.

Step 504: After receiving the AUTS, a UDM network element obtains the second SQN from the AUTS, and stores the second SQN.

Corresponding to the five generation manners of the AUTS on a UE side, a UDM network element side may obtain the second SQN from the AUTS in five corresponding manners. The following separately describes the five manners.

Corresponding to the manner 1 on the terminal device side, the UDM network element removes the XMAC from the AUTS, to obtain f6*$_{AK}$(second SQN), obtains the AK through calculation by using an exclusive OR XOR operation or a first operation, and decrypts f6*$_{AK}$(second SQN) by using the AK as a decryption key, to obtain the second SQN.

Corresponding to the manner 2 to the manner 5 on the terminal device side, the UDM network element obtains the XMAC from the AUTS, where a remaining part of the AUTS that is obtained after the XMAC is removed is an exclusive OR value of the second SQN and the AK (that is, second SQN⊕AK). The UDM network element may correspondingly generate the AK in the manners shown in FIG. 6B to FIG. 6E, and performs an exclusive OR operation on the AK and the remaining part of the AUTS that is obtained after the XMAC is removed, to obtain the second SQN.

Based on a same inventive concept as the method embodiments, an embodiment of this application further provides a communication apparatus, configured to perform the method performed by the terminal device or the UE in the foregoing method embodiments shown in FIG. 4 and FIG. 5. For a related feature, refer to the foregoing method embodiments. Details are not described herein again. As shown in FIG. 7, the apparatus includes a receiving unit 701, a processing unit 702, and a sending unit 703.

The receiving unit 701 is configured to receive a random number and a first sequence number from a unified data management network element.

The processing unit 702 is configured to: after determining that a difference between the first sequence number and a locally prestored second sequence number is greater than a threshold, connect a message authentication code after an exclusive OR value of an authentication key and the sequence number, to generate a synchronization failure parameter, where the authentication key is generated based on a first parameter and a first reference value, and the first reference value is generated based on a second parameter and a third parameter, where the first parameter, the second parameter, and the third parameter each include any one of the following: the random number, a locally prestored key K, or the message authentication code.

The sending unit 703 is configured to send a synchronization failure message to the unified data management network element, where the synchronization failure message carries the synchronization failure parameter.

In a possible implementation, the processing unit 702 may generate the authentication key based on the first parameter and the first reference value in a plurality of manners. The following lists two of the plurality of manners.

Manner 1: The first reference value is generated based on the random number and the message authentication code. For example, the first reference value is generated based on the random number and the message authentication code by using an f5 operation. The authentication key is generated based on the first reference value and the key K. For example, the authentication key is generated based on the first reference value and the key K by using an f5 operation.

Manner 2: The first reference value is generated based on the key K and the message authentication code. For example, the first reference value is generated based on the random number and the message authentication code by using an f5 operation. The authentication key is generated based on the first reference value and the random number. For example, the authentication key is generated based on the first reference value and the random number by using an f5 operation.

In a possible implementation, the processing unit 702 may alternatively generate the authentication key based on the first parameter and the first reference value in the following manner: The processing unit 702 first generates the first reference value based on the random number and the key K, and then generates the authentication key based on the first reference value and the message authentication code.

In a possible implementation, when the processing unit 702 generates the first reference value based on the random number and the key K, in addition to an f5 operation, another operation, such as an exclusive OR operation, may alternatively be used. For example, the first reference value is generated by using an exclusive OR operation that is performed on the random number and the key K.

In a possible implementation, when the processing unit 702 generates the authentication key based on the first reference value and the message authentication code, in addition to an f5 operation, another operation, such as an exclusive OR operation, may alternatively be used. For example, the authentication key is generated by using an exclusive OR operation that is performed on the first reference value and the message authentication code.

In a possible implementation, before sending the synchronization failure message to the unified data management network element, the sending unit 703 may further notify the unified data management network element of a generation manner of the authentication key, for example, may send a first indication message to the unified data management network element, where the first indication message is used to indicate the generation manner of the authentication key.

In a possible implementation, the synchronization failure message includes a first indication message, where the first indication message is used to indicate a generation manner of the authentication key.

Based on a same inventive concept as the method embodiments, an embodiment of this application further provides a communication apparatus, configured to perform the method performed by the unified data management network element or the UDM network element in the foregoing method embodiments shown in FIG. 4 and FIG. 5. For a related feature, refer to the foregoing method embodiments. Details are not described herein again. As shown in FIG. 8, the apparatus includes a sending unit 801, a receiving unit 802, and a processing unit 803.

The sending unit 801 is configured to send a random number and a first sequence number to a terminal device.

The receiving unit 802 is configured to receive a synchronization failure message from the terminal device, where the synchronization failure message carries a synchronization failure parameter.

The processing unit 803 is configured to: obtain a message authentication code from the synchronization failure parameter; and obtain a second sequence number from the synchronization failure parameter based on an authentication key, where the authentication key is generated based on a first parameter and a first reference value, and the first reference value is generated based on a second parameter and a third parameter, where the first parameter, the second parameter, and the third parameter each include any one of the following: the random number, a key K of the terminal device, or the message authentication code.

In a possible implementation, the processing unit 803 may generate the authentication key based on the first parameter and the first reference value in a plurality of manners. The following lists two of the plurality of manners.

Manner 1: The first reference value is generated based on the random number and the message authentication code. For example, the first reference value is generated based on the random number and the message authentication code by using an f5 operation. The authentication key is generated based on the first reference value and the key K. For example, the authentication key is generated based on the first reference value and the key K by using an f5 operation.

Manner 2: The first reference value is generated based on the key K and the message authentication code. For example, the first reference value is generated based on the random number and the message authentication code by using an f5 operation. The authentication key is generated based on the first reference value and the random number. For example, the authentication key is generated based on the first reference value and the random number by using an f5 operation.

In a possible implementation, the processing unit 803 may alternatively generate the authentication key based on the first parameter and the first reference value in the following manner: The processing unit 803 first generates the first reference value based on the random number and the key K, and then generates the authentication key based on the first reference value and the message authentication code.

In a possible implementation, when the processing unit 803 generates the first reference value based on the random number and the key K, in addition to an f5 operation, another operation, such as an exclusive OR operation, may alternatively be used. For example, the first reference value is generated by using an exclusive OR operation that is performed on the random number and the key K.

In a possible implementation, when the processing unit 803 generates the authentication key based on the first reference value and the message authentication code, in addition to an f5 operation, another operation, such as an exclusive OR operation, may alternatively be used. For example, the authentication key is generated by using an exclusive OR operation that is performed on the first reference value and the message authentication code.

In a possible implementation, before receiving the synchronization failure message from the terminal device, the receiving unit 802 may further receive a first indication message from the terminal device, where the first indication message is used to indicate a generation manner of the authentication key.

In a possible implementation, the synchronization failure message includes a first indication message, where the first indication message is used to indicate a generation manner of the authentication key.

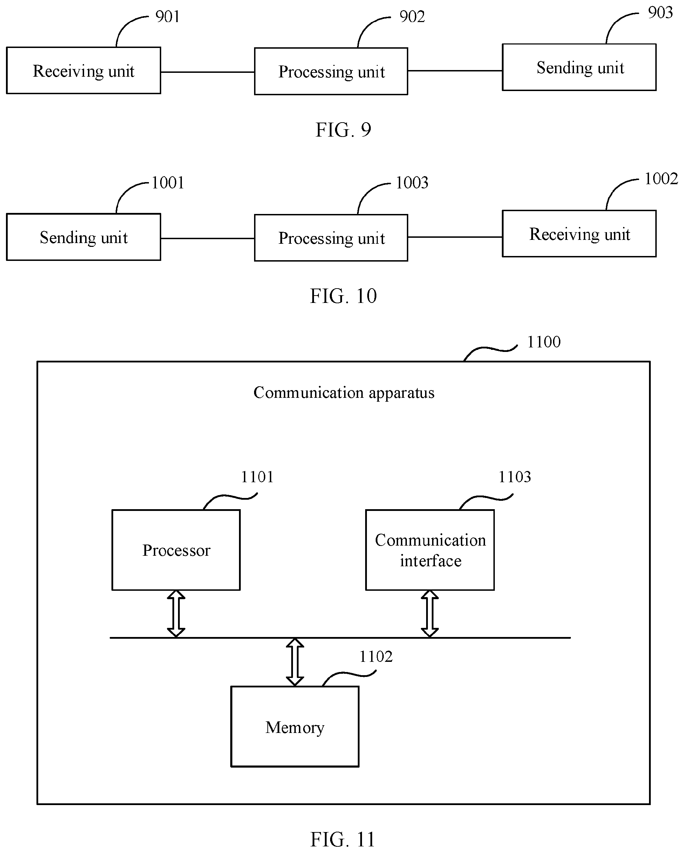

Based on a same inventive concept as the method embodiments, an embodiment of this application further provides a communication apparatus, configured to perform the method performed by the terminal device or the UE in the foregoing method embodiments shown in FIG. 3 and FIG. 5. For a related feature, refer to the foregoing method embodiments. Details are not described herein again. As shown in FIG. 9, the apparatus includes a receiving unit 901, a processing unit 902, and a sending unit 903.

The receiving unit 901 is configured to receive a random number and a first sequence number from a unified data management network element.

The processing unit 902 is configured to: after determining that a difference between the first sequence number and a locally prestored second sequence number is greater than a threshold, perform symmetric encryption on the second sequence number by using an authentication key, to generate a synchronization failure parameter, where the authentication key is generated based on the random number and a locally prestored key K.

The sending unit 903 is configured to send a synchronization failure message to the unified data management network element, where the synchronization failure message carries the synchronization failure parameter.

In a possible implementation, before sending the synchronization failure message to the unified data management network element, the sending unit 903 may further send a first indication message, where the first indication message is used to indicate a generation manner of the synchronization failure parameter.

In a possible implementation, the synchronization failure message includes a first indication message, where the first indication message is used to indicate a generation manner of the synchronization failure parameter.

Based on a same inventive concept as the method embodiments, an embodiment of this application further provides a communication apparatus, configured to perform the method performed by the unified data management network element or the UDM network element in the foregoing method embodiments shown in FIG. 3 and FIG. 5. For a related feature, refer to the foregoing method embodiments. Details are not described herein again. As shown in FIG. 10, the apparatus includes a sending unit 1001, a receiving unit 1002, and a processing unit 1103.

The sending unit 1001 is configured to send a random number and a first sequence number to a terminal device.

The receiving unit 1002 is configured to receive a synchronization failure message from the terminal device, where the synchronization failure message carries a synchronization failure parameter.

The processing unit 1003 is configured to perform symmetric decryption on the synchronization failure parameter based on an authentication key, to obtain a second sequence number, where the authentication key is generated based on the random number and a key K of the terminal device.

In a possible implementation, before receiving the synchronization failure message from the terminal device, the receiving unit 1002 may further receive a first indication message from the terminal device, where the first indication message is used to indicate a generation manner of the authentication key.

In a possible implementation, the synchronization failure message includes a first indication message, where the first indication message is used to indicate a generation manner of the authentication key.

Division into units in the embodiments of this application is an example, and is merely logical function division. During actual implementation, another division manner may be used. In addition, function units in the embodiments of this application may be integrated into one processor, or may exist alone physically, or two or more units may be integrated into one module. The foregoing integrated unit may be implemented in a form of hardware, or may be implemented in a form of a software function module.

When the integrated unit is implemented in a form of a software function unit and sold or used as an independent product, the integrated unit may be stored in a computer-readable storage medium. Based on such an understanding, the technical solutions of this application essentially, or the part contributing to the current technology, or all or some of the technical solutions may be implemented in a form of a software product. The computer software product is stored in a storage medium and includes several instructions for instructing a terminal device (which may be a personal computer, mobile phone, a network device, or the like) or a processor (processor) to perform all or some of the steps of the methods in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

In the embodiments of this application, the unified data management network element and the terminal device may be both presented in a form of function modules obtained through division in an integrated manner. The "module" herein may be a specific ASIC, a circuit, a processor and a memory that execute one or more software or firmware programs, an integrated logic circuit, and/or another component that can provide the foregoing functions.

In a simple embodiment, a person skilled in the art may figure out that the unified data management network element may be in a form shown in FIG. 11.

A communication apparatus 1100 shown in FIG. 11 includes at least one processor 1101 and a memory 1102, and optionally, may further include a communication interface 1103.

The memory 1102 may be a volatile memory such as a random access memory. Alternatively, the memory may be a non-volatile memory such as a read-only memory, a flash memory, a hard disk drive (hard disk drive, HDD), or a solid-state drive (solid-state drive, SSD). Alternatively, the memory 1102 is any other medium that can be used to carry or store expected program code in an instruction form or a data structure form and that can be accessed by a computer, but is not limited thereto. The memory 1102 may be a combination of the foregoing memories.

In this embodiment of this application, a specific connection medium between the processor 1101 and the memory 1102 is not limited.

The processor 1101 may have a data transceiver function, and can communicate with another device. In the apparatus shown in FIG. 11, an independent data transceiver module, for example, the communication interface 1103, may also be disposed and is configured to receive and send data. When communicating with the another device, the processor 1101 may transmit data through the communication interface 1103.

When the unified data management network element is in the form shown in FIG. 11, the processor 1101 in FIG. 11 may invoke computer-executable instructions stored in the memory 1402, to enable the base station to perform the method performed by the base station in any one of the foregoing method embodiments.

Specifically, functions/implementation processes of the sending unit, the receiving unit, and the processing unit in FIG. 9 or FIG. 10 may be implemented by the processor 1101 in FIG. 11 by invoking the computer-executable instructions stored in the memory 1102. Alternatively, functions/implementation processes of the processing unit in FIG. 9 or FIG. 10 may be implemented by the processor 1101 in FIG. 11 by invoking computer-executable instructions stored in the memory 1102, and functions/implementation processes of the sending unit and the receiving unit in FIG. 9 or FIG. 10 may be implemented through the communication interface 1103 in FIG. 11.

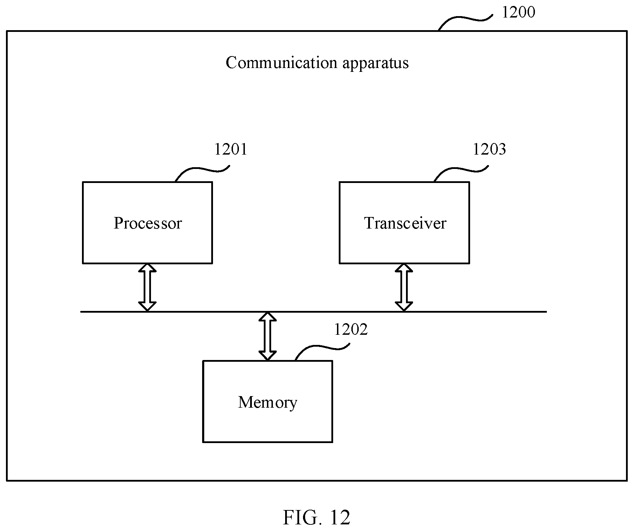

In a simple embodiment, a person skilled in the art may figure out that the terminal device may be in a form shown in FIG. 12.

A communication apparatus 1200 shown in FIG. 12 includes at least one processor 1201 and a memory 1202, and optionally, may further include a transceiver 1203.

The memory 1202 may be a volatile memory such as a random access memory. Alternatively, the memory may be a non-volatile memory such as a read-only memory, a flash memory, a hard disk drive (hard disk drive, HDD), or a solid-state drive (solid-state drive, SSD). Alternatively, the memory 1202 is any other medium that can be used to carry or store expected program code in an instruction form or a data structure form and that can be accessed by a computer, but is not limited thereto. The memory 1202 may be a combination of the foregoing memories.

In this embodiment of this application, a specific connection medium between the processor 1201 and the memory 1202 is not limited.

The processor 1201 may have a data transceiver function, and can communicate with another device. In the apparatus shown in FIG. 12, an independent data transceiver module, for example, the transceiver 1203, may also be disposed and is configured to receive and send data. When communicating with the another device, the processor 1201 may transmit data through the transceiver 1203.

When the terminal device is in the form shown in FIG. 12, the processor 1201 in FIG. 12 may invoke computer-executable instructions stored in the memory 1202, to enable the terminal device to perform the method performed by the terminal device in any one of the foregoing method embodiments.

Specifically, functions/implementation processes of the receiving unit, the processing unit, and the sending unit in FIG. 7 or FIG. 8 may be implemented by the processor 1201 in FIG. 12 by invoking the computer-executable instructions stored in the memory 1202. Alternatively, functions/implementation processes of the processing unit in FIG. 7 or FIG. 8 may be implemented by the processor 1201 in FIG. 12 by invoking computer-executable instructions stored in the memory 1202, and functions/implementation processes of the receiving unit and the sending unit in FIG. 7 or FIG. 8 may be implemented through the transceiver 1203 in FIG. 12.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Clearly, a person skilled in the art can make various modifications and variations to this application without departing from the scope of this application. This application is intended to cover these modifications and variations of this application provided that they fall within the scope of the claims of this application.

**Claims**

1. A parameter sending method, wherein the method comprises:

   receiving (401), by a terminal device, in an authentication process, a random number and a first sequence number from a core network device;
   after determining (402), by the terminal device, that a difference between the first sequence number and a locally prestored second sequence number is greater than a threshold, concatenating a message authentication code after an exclusive OR value of an authentication key and the second sequence number to generate (403) a synchronization failure parameter,
   wherein the authentication key is generated based on a first parameter and a first reference value, and the first reference value is generated based on a second parameter and a third parameter, wherein each of the first parameter, the second parameter, and the third parameter comprises any one of the following: the random number, a locally prestored key K, or the message authentication code; and
   sending (404), by the terminal device, a synchronization failure message to the core network device, wherein the synchronization failure message carries the synchronization failure parameter.

2. The method according to claim 1, wherein that the authentication key is generated based on a first parameter and a first reference value comprises:

   the first reference value is generated based on the random number and the message authentication code, and the authentication key is generated based on the first reference value and the key K; or
   the first reference value is generated based on the key K and the message authentication code, and the authentication key is generated based on the first reference value and the random number.

3. The method according to claim 1, wherein that the authentication key is generated based on a first parameter and a first reference value comprises:
   the first reference value is generated based on the random number and the key K, and the authentication key is generated based on the first reference value and the message authentication code.

4. The method according to any one of claims 1 to 3, wherein before the sending a synchronization failure message to the core network device, the method further comprises:
   sending a first indication message to the core network device, wherein the first indication message indicates a generation manner of the authentication key.

5. The method according to any one of claims 1 to 3, wherein the synchronization failure message comprises a first indication message, and the first indication message is used to indicate a generation manner of the authentication key.

6. A parameter sending method, wherein the method comprises:

sending (401), by a core network device, in an authentication process, a random number and a first sequence number to a terminal device;
receiving (404), by the core network device, a synchronization failure message from the terminal device, wherein the synchronization failure message carries a synchronization failure parameter;
obtaining (405), by the core network device, a message authentication code from the synchronization failure parameter; and
obtaining (405), by the core network device, a second sequence number from the synchronization failure parameter based on an authentication key, wherein the authentication key is generated based on a first parameter and a first reference value, and the first reference value is generated based on a second parameter and a third parameter, wherein each of the first parameter, the second parameter, and the third parameter comprises any one of the following: the random number, a key K of the terminal device, or the message authentication code.

7. The method according to claim 6, wherein that the authentication key is generated based on a first parameter and a first reference value comprises:

the first reference value is generated based on the random number and the message authentication code, and the authentication key is generated based on the first reference value and the key K; or
the first reference value is generated based on the key K and the message authentication code, and the authentication key is generated based on the first reference value and the random number.

8. A parameter sending method, wherein the method comprises:

receiving (301), by a terminal device, in an authentication process, a random number and a first sequence number from a core network device;
after determining (302), by the terminal device, that a difference between the first sequence number and a locally prestored second sequence number is greater than a threshold, performing (303), by the terminal device, symmetric encryption on the second sequence number by using an authentication key to generate a synchronization failure parameter, wherein the authentication key is generated based on the random number and a locally prestored key K; and
sending (304), by the terminal device, a synchronization failure message to the core network device, wherein the synchronization failure message carries the synchronization failure parameter.

9. The method according to claim 8, wherein before the sending a synchronization failure message to the core network device, the method further comprises:
sending, by the terminal device, a first indication message, wherein the first indication message indicates a generation manner of the synchronization failure parameter.

10. The method according to claim 8, wherein the synchronization failure message comprises a first indication message, and the first indication message indicates a generation manner of the authentication key.

11. A parameter sending method, wherein the method comprises:

sending (301), by a core network device, in an authentication process, a random number and a first sequence number to a terminal device;
receiving (304), by the core network device, a synchronization failure message from the terminal device, wherein the synchronization failure message carries a synchronization failure parameter; and
performing (305), by the core network device, symmetric decryption on the synchronization failure parameter based on an authentication key, to obtain a second sequence number, wherein the authentication key is generated based on the random number and a key K of the terminal device.

12. The method according to claim 11, wherein before the receiving a synchronization failure message from the terminal device, the method further comprises:

receiving, by the core network device, a first indication message from the terminal device, wherein the first indication message indicates a generation manner of the authentication key.

13. The method according to claim 12, wherein the synchronization failure message comprises a first indication message, and the first indication message indicates a generation manner of the authentication key.

14. A communication apparatus, configured to implement the method according to any one of claims 1 to 5.

15. A communication apparatus, configured to implement the method according to any one of claims 6 to 7.

16. A communication apparatus, configured to implement the method according to any one of claims 8 to 10.

17. A communication apparatus, configured to implement the method according to any one of claims 11 to 13.

**Patentansprüche**

1. Parametersendeverfahren, wobei das Verfahren Folgendes umfasst:

Empfangen (401), durch ein Endgerät, in einem Authentifizierungsprozess, einer zufälligen Zahl und einer ersten Sequenznummer von einem Kernnetzwerkgerät;
nach Bestimmen (402), durch das Endgerät, dass eine Differenz zwischen der ersten Sequenznummer und einer lokal vorgespeicherten zweiten Sequenznummer größer als ein Schwellenwert ist, Konkatenieren eines Nachrichtenauthentifizierungscodes nach einem exklusiven ODER-Wert eines Authentifizierungsschlüssels und der zweiten Sequenznummer, um einen Synchronisierungsfehlerparameter zu erzeugen (403),
wobei der Authentifizierungsschlüssel basierend auf einem ersten Parameter und einem ersten Referenzwert erzeugt wird und der erste Referenzwert basierend auf einem zweiten Parameter und einem dritten Parameter erzeugt wird, wobei jeder des ersten Parameters, des zweiten Parameters und des dritten Parameters ein beliebiges der Folgenden umfasst: die zufällige Zahl, einen lokal vorgespeicherten Schlüssel K oder den Nachrichtenauthentifizierungscode; und
Senden (404), durch das Endgerät, einer Synchronisierungsfehlernachricht an das Kernnetzwerkgerät, wobei die Synchronisierungsfehlernachricht den Synchronisierungsfehlerparameter enthält.

2. Verfahren nach Anspruch 1, wobei die Tatsache, dass der Authentifizierungsschlüssel basierend auf einem ersten Parameter und einem ersten Referenzwert erzeugt wird, Folgendes umfasst:

der erste Referenzwert wird basierend auf der zufälligen Zahl und dem Nachrichtenauthentifizierungscode erzeugt und der Authentifizierungsschlüssel wird basierend auf dem ersten Referenzwert und dem Schlüssel K erzeugt; oder
der erste Referenzwert wird basierend auf dem Schlüssel K und dem Nachrichtenauthentifizierungscode erzeugt und der Authentifizierungsschlüssel wird basierend auf dem ersten Referenzwert und der zufälligen Zahl erzeugt.

3. Verfahren nach Anspruch 1, wobei die Tatsache, dass der Authentifizierungsschlüssel basierend auf einem ersten Parameter und einem ersten Referenzwert erzeugt wird, Folgendes umfasst:
der erste Referenzwert wird basierend auf der zufälligen Zahl und dem Schlüssel K erzeugt und der Authentifizierungsschlüssel wird basierend auf dem ersten Referenzwert und dem Nachrichtenauthentifizierungscode erzeugt.

4. Verfahren nach einem der Ansprüche 1 bis 3, wobei das Verfahren vor dem Senden einer Synchronisierungsfehlernachricht an das Kernnetzwerkgerät ferner Folgendes umfasst:
Senden einer ersten Anzeigenachricht an das Kernnetzwerkgerät, wobei die erste Anzeigenachricht eine Erzeugungsart des Authentifizierungsschlüssels anzeigt.

5. Verfahren nach einem der Ansprüche 1 bis 3, wobei die Synchronisierungsfehlernachricht eine erste Anzeigenachricht umfasst und die erste Anzeigenachricht verwendet wird, um eine Erzeugungsart des Authentifizierungsschlüssels anzuzeigen.

6. Parametersendeverfahren, wobei das Verfahren Folgendes umfasst:

Senden (401), durch ein Kernnetzwerkgerät, in einem Authentifizierungsprozess, einer zufälligen Zahl und einer ersten Sequenznummer an ein Endgerät;

Empfangen (404), durch das Kernnetzwerkgerät, einer Synchronisierungsfehlernachricht von dem Endgerät, wobei die Synchronisierungsfehlernachricht einen Synchronisierungsfehlerparameter enthält;

Erlangen (405), durch das Kernnetzwerkgerät, eines Nachrichtenauthentifizierungscodes anhand des Synchronisierungsfehlerparameters; und

Erlangen (405), durch das Kernnetzwerkgerät, einer zweiten Sequenznummer anhand des Synchronisierungsfehlerparameters, basierend auf einem Authentifizierungsschlüssel, wobei der Authentifizierungsschlüssel basierend auf einem ersten Parameter und einem ersten Referenzwert erzeugt wird und der erste Referenzwert basierend auf einem zweiten Parameter und einem dritten Parameter erzeugt wird, wobei jeder des ersten Parameters, des zweiten Parameters und des dritten Parameters ein beliebiges der Folgenden umfasst: die zufällige Zahl, einen Schlüssel K des Endgeräts oder den Nachrichtenauthentifizierungscode.

7. Verfahren nach Anspruch 6, wobei die Tatsache, dass der Authentifizierungsschlüssel basierend auf einem ersten Parameter und einem ersten Referenzwert erzeugt wird, Folgendes umfasst:

der erste Referenzwert wird basierend auf der zufälligen Zahl und dem Nachrichtenauthentifizierungscode erzeugt und der Authentifizierungsschlüssel wird basierend auf dem ersten Referenzwert und dem Schlüssel K erzeugt; oder

der erste Referenzwert wird basierend auf dem Schlüssel K und dem Nachrichtenauthentifizierungscode erzeugt und der Authentifizierungsschlüssel wird basierend auf dem ersten Referenzwert und der zufälligen Zahl erzeugt.

8. Parametersendeverfahren, wobei das Verfahren Folgendes umfasst:

Empfangen (301), durch ein Endgerät, in einem Authentifizierungsprozess, einer zufälligen Zahl und einer ersten Sequenznummer von einem Kernnetzwerkgerät;

nach Bestimmen (302), durch das Endgerät, dass ein Unterschied zwischen der ersten Sequenznummer und einer lokal vorgespeicherten zweiten Sequenznummer größer als ein Schwellenwert ist, Durchführen (303), durch das Endgerät, einer symmetrischen Verschlüsselung an der zweiten Sequenznummer unter Verwendung eines Authentifizierungsschlüssels zum Erzeugen eines Synchronisierungsfehlerparameters, wobei der Authentifizierungsschlüssel basierend auf der zufälligen Zahl und einem lokal vorgespeicherten Schlüssel K erzeugt wird; und

Senden (304), durch das Endgerät, einer Synchronisierungsfehlernachricht an das Kernnetzwerkgerät, wobei die Synchronisierungsfehlernachricht den Synchronisierungsfehlerparameter enthält.

9. Verfahren nach Anspruch 8, wobei das Verfahren vor dem Senden einer Synchronisierungsfehlernachricht an das Kernnetzwerkgerät ferner Folgendes umfasst:

Senden, durch das Endgerät, einer ersten Anzeigenachricht, wobei die erste Anzeigenachricht eine Erzeugungsart des Synchronisierungsfehlerparameters anzeigt.

10. Verfahren nach Anspruch 8, wobei die Synchronisierungsfehlernachricht eine erste Anzeigenachricht umfasst und die erste Anzeigenachricht eine Erzeugungsart des Authentifizierungsschlüssels anzeigt.

11. Parametersendeverfahren, wobei das Verfahren Folgendes umfasst:

Senden (301), durch ein Kernnetzwerkgerät, in einem Authentifizierungsprozess, einer zufälligen Zahl und einer ersten Sequenznummer an ein Endgerät;

Empfangen (304), durch das Kernnetzwerkgerät, einer Synchronisierungsfehlernachricht von dem Endgerät, wobei die Synchronisierungsfehlernachricht einen Synchronisierungsfehlerparameter enthält; und

Durchführen (305), durch das Kernnetzwerkgerät, einer symmetrischen Entschlüsselung an dem Synchronisierungsfehlerparameter basierend auf einem Authentifizierungsschlüssel, um eine zweite Sequenznummer zu erlangen, wobei der Authentifizierungsschlüssel basierend auf der zufälligen Zahl und einem Schlüssel K des Endgeräts erzeugt wird.

12. Verfahren nach Anspruch 11, wobei das Verfahren vor dem Empfangen einer Synchronisierungsfehlernachricht von dem Endgerät ferner Folgendes umfasst:

Empfangen, durch das Kernnetzwerkgerät, einer ersten Anzeigenachricht von dem Endgerät, wobei die erste Anzeigenachricht eine Erzeugungsart des Authentifizierungsschlüssels anzeigt.

**13.** Verfahren nach Anspruch 12, wobei die Synchronisierungsfehlernachricht eine erste Anzeigenachricht umfasst und die erste Anzeigenachricht eine Erzeugungsart des Authentifizierungsschlüssels anzeigt.

**14.** Kommunikationsvorrichtung, die dazu konfiguriert ist, das Verfahren nach einem der Ansprüche 1 bis 5 zu implementieren.

**15.** Kommunikationsvorrichtung, die dazu konfiguriert ist, das Verfahren nach einem der Ansprüche 6 bis 7 zu implementieren.

**16.** Kommunikationsvorrichtung, die dazu konfiguriert ist, das Verfahren nach einem der Ansprüche 8 bis 10 zu implementieren.

**17.** Kommunikationsvorrichtung, die dazu konfiguriert ist, das Verfahren nach einem der Ansprüche 11 bis 13 zu implementieren.


**Revendications**

**1.** Procédé d'envoi de paramètres, dans lequel le procédé comprend :

la réception (401), par un dispositif terminal, dans un processus d'authentification, d'un nombre aléatoire et d'un premier numéro de séquence provenant d'un dispositif de réseau central ;
après la détermination (402), par le dispositif terminal, du fait qu'une différence entre le premier numéro de séquence et un second numéro de séquence préenregistré localement est supérieure à un seuil, la concaténation d'un code d'authentification de message après une valeur OU exclusive d'une clé d'authentification et du second numéro de séquence pour générer (403) un paramètre d'échec de synchronisation,
dans lequel la clé d'authentification est générée sur la base d'un premier paramètre et d'une première valeur de référence, et la première valeur de référence est générée sur la base d'un deuxième paramètre et d'un troisième paramètre, dans lequel chacun du premier paramètre, du deuxième paramètre et du troisième paramètre comprend l'un quelconque des éléments suivants : le nombre aléatoire, une clé K préenregistrée localement ou le code d'authentification de message ; et
l'envoi (404), par le dispositif terminal, d'un message d'échec de synchronisation au dispositif de réseau central, dans lequel le message d'échec de synchronisation contient le paramètre d'échec de synchronisation.

**2.** Procédé selon la revendication 1, dans lequel le fait que la clé d'authentification est générée sur la base d'un premier paramètre et une première valeur de référence comprend :

la première valeur de référence est générée sur la base du nombre aléatoire et du code d'authentification de message, et la clé d'authentification est générée sur la base de la première valeur de référence et de la clé K ; ou
la première valeur de référence est générée sur la base de la clé K et du code d'authentification de message, et la clé d'authentification est générée sur la base de la première valeur de référence et du nombre aléatoire.

**3.** Procédé selon la revendication 1, dans lequel le fait que la clé d'authentification est générée sur la base d'un premier paramètre et d'une première valeur de référence comprend :
la première valeur de référence est générée sur la base du nombre aléatoire et de la clé K, et la clé d'authentification est générée sur la base de la première valeur de référence et du code d'authentification de message.

**4.** Procédé selon l'une quelconque des revendications 1 à 3, dans lequel, avant l'envoi d'un message d'échec de synchronisation au dispositif de réseau central, le procédé comprend également :
l'envoi d'un premier message d'indication au dispositif de réseau central, dans lequel le premier message d'indication indique un mode de génération de la clé d'authentification.

**5.** Procédé selon l'une quelconque des revendications 1 à 3, dans lequel le message d'échec de synchronisation comprend un premier message d'indication, et le premier message d'indication est utilisé pour indiquer un mode de génération de la clé d'authentification.

**6.** Procédé d'envoi de paramètres, dans lequel le procédé comprend :

l'envoi (401), par un dispositif de réseau central, dans un processus d'authentification, d'un nombre aléatoire et d'un premier numéro de séquence à un dispositif terminal ;

la réception (404), par le dispositif de réseau central, d'un message d'échec de synchronisation provenant du dispositif terminal, dans lequel le message d'échec de synchronisation contient un paramètre d'échec de synchronisation ;

l'obtention (405), par le dispositif de réseau central, d'un code d'authentification de message à partir du paramètre d'échec de synchronisation ; et

l'obtention (405), par le dispositif de réseau central, d'un second numéro de séquence à partir du paramètre d'échec de synchronisation sur la base d'une clé d'authentification, dans lequel la clé d'authentification est générée sur la base d'un premier paramètre et d'une première valeur de référence, et la première valeur de référence est générée sur la base d'un deuxième paramètre et d'un troisième paramètre, dans lequel chacun du premier paramètre, du deuxième paramètre et du troisième paramètre comprend l'un quelconque des éléments suivants : le nombre aléatoire, une clé K du dispositif terminal ou le code d'authentification de message.

7.  Procédé selon la revendication 6, dans lequel le fait que la clé d'authentification est générée sur la base d'un premier paramètre et d'une première valeur de référence comprend :

la première valeur de référence est générée sur la base du nombre aléatoire et du code d'authentification de message, et la clé d'authentification est générée sur la base de la première valeur de référence et de la clé K ; ou

la première valeur de référence est générée sur la base de la clé K et du code d'authentification de message, et la clé d'authentification est générée sur la base de la première valeur de référence et du nombre aléatoire.

8.  Procédé d'envoi de paramètres, dans lequel le procédé comprend :

la réception (301), par un dispositif terminal, dans un processus d'authentification, d'un nombre aléatoire et d'un premier numéro de séquence provenant d'un dispositif de réseau central ;

après la détermination (302), par le dispositif terminal, du fait qu'une différence entre le premier numéro de séquence et un second numéro de séquence préenregistré localement est supérieure à un seuil, la réalisation (303), par le dispositif terminal, d'un chiffrement symétrique sur le second numéro de séquence à l'aide d'une clé d'authentification pour générer un paramètre d'échec de synchronisation, dans lequel la clé d'authentification est générée sur la base du nombre aléatoire et d'une clé K préenregistrée localement ; et

l'envoi (304), par le dispositif terminal, d'un message d'échec de synchronisation au dispositif de réseau central, dans lequel le message d'échec de synchronisation contient le paramètre d'échec de synchronisation.

9.  Procédé selon la revendication 8, dans lequel, avant l'envoi d'un message d'échec de synchronisation au dispositif de réseau central, le procédé comprend également :
l'envoi, par le dispositif terminal, d'un premier message d'indication, dans lequel le premier message d'indication indique un mode de génération du paramètre d'échec de synchronisation.

10. Procédé selon la revendication 8, dans lequel le message d'échec de synchronisation comprend un premier message d'indication, et le premier message d'indication indique une manière de génération de la clé d'authentification.

11. Procédé d'envoi de paramètres, dans lequel le procédé comprend :

l'envoi (301), par un dispositif de réseau central, dans un processus d'authentification, d'un nombre aléatoire et d'un premier numéro de séquence à un dispositif terminal ;

la réception (304), par le dispositif de réseau central, d'un message d'échec de synchronisation provenant du dispositif terminal, dans lequel le message d'échec de synchronisation contient un paramètre d'échec de synchronisation ; et

la réalisation (305), par le dispositif de réseau central, d'un déchiffrement symétrique sur le paramètre d'échec de synchronisation sur la base d'une clé d'authentification, pour obtenir un second numéro de séquence, dans lequel la clé d'authentification est générée sur la base du nombre aléatoire et d'une clé K du dispositif terminal.

12. Procédé selon la revendication 11, dans lequel, avant la réception d'un message d'échec de synchronisation en provenance du dispositif terminal, le procédé comprend également :
la réception, par le dispositif de réseau central, d'un premier message d'indication provenant du dispositif terminal, dans lequel le premier message d'indication indique un mode de génération de la clé d'authentification.

**13.** Procédé selon la revendication 12, dans lequel le message d'échec de synchronisation comprend un premier message d'indication, et le premier message d'indication indique une manière de génération de la clé d'authentification.

**14.** Appareil de communication, configuré pour mettre en œuvre le procédé selon l'une quelconque des revendications 1 à 5.

**15.** Appareil de communication, configuré pour mettre en œuvre le procédé selon l'une quelconque des revendications 6 à 7.

**16.** Appareil de communication, configuré pour mettre en œuvre le procédé selon l'une quelconque des revendications 8 à 10.

**17.** Appareil de communication, configuré pour mettre en œuvre le procédé selon l'une quelconque des revendications 11 à 13.

FIG. 1A

FIG. 1B

FIG. 2

| Terminal device | | Unified data management network element |
| --- | --- | --- |

Step 301: Random number and first sequence number

Step 302: Determine that a difference between the first sequence number and a locally prestored second sequence number is greater than a threshold

Step 303: Perform symmetric encryption on the locally prestored second sequence number by using an authentication key, to generate a synchronization failure parameter

Step 304: Synchronization failure message

Step 305: Perform symmetric decryption on the synchronization failure parameter based on the authentication key, to obtain the second sequence number

FIG. 3

```
┌──────────────────┐                                    ┌──────────────────────────┐
│  Terminal device │                                    │  Unified data management │
│                  │                                    │     network element      │
└──────────────────┘                                    └──────────────────────────┘
         │                                                           │
         │     Step 401: Random number and first sequence number     │
         │◀──────────────────────────────────────────────────────────│
         │                                                           │
┌────────┴─────────────────────────────────────┐                    │
│ Step 402: Determine that a difference between the first            │
│ sequence number and a locally prestored second                    │
│ sequence number is greater than a threshold   │                    │
└────────┬─────────────────────────────────────┘                    │
         │                                                           │
┌────────┴─────────────────────────────────────┐                    │
│ Step 403: Generate a synchronization failure parameter            │
│ based on an authentication key and the second │                    │
│ sequence number                               │                    │
└────────┬─────────────────────────────────────┘                    │
         │                                                           │
         │         Step 404: Synchronization failure message         │
         │──────────────────────────────────────────────────────────▶│
         │                                                           │
         │                        ┌──────────────────────────────────┴──────┐
         │                        │ Step 405: Obtain the second sequence number │
         │                        │ from the synchronization failure parameter based │
         │                        │ on the authentication key                │
         │                        └──────────────────────────────────┬──────┘
         │                                                           │
```

FIG. 4

| UE | SEAF | AUSF | UDM |
|----|------|------|-----|

Step 501: The UE initiates a registration request, and the UDM sends a RAND and an AUTN to the UE through the SEAF

Step 502: AUTS

Step 503: The SEAF sends the AUTS to the UDM through the AUSF

Step 504:
Obtain a second SQN from the AUTS, and store the second SQN

FIG. 5

FIG. 6A

Second SQN

K

RAND

AMF

f1*

f5*

xor

TEMP

f5*

XMAC

AK

Second SQN⊕AK

AUTS=second SQN⊕AK‖MAC-S

FIG. 6B

FIG. 6C

FIG. 6D

FIG. 6E

FIG. 7

FIG. 8

901

| Receiving unit |

902

| Processing unit |

903

| Sending unit |

FIG. 9

1001

| Sending unit |

1003

| Processing unit |

1002

| Receiving unit |

FIG. 10

1100

Communication apparatus

1101

| Processor |

1103

| Communication interface |

1102

| Memory |

FIG. 11

1200

Communication apparatus

1201

Processor

1203

Transceiver

1202

Memory

FIG. 12

## REFERENCES CITED IN THE DESCRIPTION

### Patent documents cited in the description

- US 20130077510 A1
- US 20170295019 A1
- US 20190081862 A1